# FASCICULE DE BREVET EUROPEEN

(11) **EP 4 087 743 B1**
(45) Date de publication et mention de la délivrance du brevet: **06.03.2024**
(21) Numéro de dépôt: 21705232.3
(22) Date de dépôt: 04.01.2021
(51) Int. Cl.: B60G 17/005, B60G 17/017, B60P 1/02

(54) **VEHICULE COMPRENANT UN CHASSIS A POSITION VERTICALE COMMANDEE, POUR POUVOIR ETRE ABAISSE DANS UNE POSITION BASSE D'APPUI SUR LE SOL**
FAHRZEUG MIT EINEM CHASSIS MIT GEREGELTER VERTIKALER LAGE, UM IN EINE AUF DEM BODEN ABGESTÜTZTE NIEDRIGE POSITION ABGESENKT ZU WERDEN
VEHICLE COMPRISING A CONTROLLED VERTICAL POSITION CHASSIS, IN ORDER TO BE LOWERED INTO A LOW POSITION SUPPORTED ON THE GROUND

(30) Priorité: 08.01.2020 FR 2000123
(43) Date de publication de la demande: 16.11.2022
(73) Titulaire: Commissariat à l'énergie atomique et aux énergies alternatives, 75015 Paris (FR)
(72) Inventeur: CERVANTES, Valéry, 38054 GRENOBLE CEDEX 09 (FR)
(74) Mandataire: Brevalex
(86) Numéro de dépôt international: PCT/FR2021/050002
(87) Numéro de publication internationale: WO 2021/140290

(56) Documents cités:
- WO-A1-01/74612
- WO-A1-2004/106110
- US-A- 4 145 073

## Description

L'invention se rapporte au domaine des véhicules dont le châssis est commandable pour pouvoir être déplacé entre une position haute de roulage, et une position basse d'appui de ce châssis sur le sol.

L'invention se rapporte de préférence aux véhicules de livraison présentant un espace de chargement des marchandises, et encore plus préférentiellement à des camions de livraison urbaine.

Le document WO2004/106110A1 divulgue un véhicule connu similaire au préambule de la revendication 1.

Sur ce type de véhicule, le caractère abaissable du châssis permet de faciliter les opérations de chargement et de déchargement des marchandises. En effet, lorsque le châssis adopte sa position basse d'appui sur le sol, l'espace de chargement des marchandises se trouve au plus près du sol. La manutention des marchandises, en particulier la manutention nécessaire à leur livraison, s'en trouve avantageusement simplifiée.

Un tel véhicule comprend plusieurs roues, et, associé à chaque roue, un bras pivotant de suspension de roue sur le châssis. Il est également prévu, associé à chaque roue, un actionneur de bras de suspension agencé entre le bras de suspension et le châssis. L'actionneur permet de commander une position angulaire du bras relativement au châssis, afin de faire varier la position verticale de ce châssis.

Différentes technologies sont possibles pour la réalisation de l'actionneur. Mais en cas de défaillance de ce dernier durant le roulage, par exemple suite à une perte de pression dans l'actionneur, il existe un risque que le châssis du véhicule en mouvement chute et heurte le sol de manière accidentelle. Pour pallier cet inconvénient, des solutions techniques ont été envisagées en prévoyant des butées mécaniques rétractables, qui, en position active, permettent de limiter l'abaissement du châssis afin qu'il ne heurte accidentellement le sol. La position active des butées mécaniques est adoptée durant le roulage du véhicule. Ces butées sont placées en position inactive lorsque le véhicule est à l'arrêt, avant de procéder à l'abaissement du châssis, pour l'amener dans sa position basse d'appui sur le sol.

Néanmoins, il existe un besoin de simplification de la conception de ces butées de sécurité, ainsi qu'un besoin d'amélioration de leur fiabilité, et encore un besoin de diminution de leur encombrement. Il existe également un besoin d'amélioration de la conception de ces butées pour les rendre commandables à distance, par exemple depuis le poste de conduite pour faciliter la procédure d'abaissement.

Pour répondre au moins partiellement à ces besoins, l'invention a pour objet un véhicule comprenant un châssis à position verticale commandée, de manière à pouvoir être déplacé entre une position haute de roulage et une position basse d'appui de ce châssis sur le sol, le véhicule comprenant également une pluralité de roues, et, associés à chaque roue :
- un bras de suspension portant la roue, le bras étant monté pivotant sur le châssis ;
- un actionneur de bras de suspension, agencé entre le bras de suspension et le châssis, l'actionneur permettant de commander une position angulaire du bras relativement au châssis, afin de faire varier la position verticale de ce châssis ;
- un dispositif sécuritaire capable de limiter l'abaissement accidentel du châssis, le dispositif pouvant adopter d'une part un état actif dans lequel il permet de limiter la rotation du bras de suspension, selon un premier sens conduisant à l'abaissement du châssis, jusqu'à une position de sécurité de ce bras, et d'autre part un état inactif dans lequel il autorise la rotation de ce bras dans le premier sens, au-delà de la position de sécurité.

Selon l'invention, le dispositif sécuritaire comporte un vérin dont un cylindre est monté sur le châssis et dont un piston est monté sur le bras de suspension, ou inversement, le vérin définissant une première chambre communiquant avec un premier et un second passage de fluide à travers le cylindre, espacés l'un de l'autre selon une direction de coulissement du piston dans le cylindre de sorte que le second passage se situe le plus proche d'un fond de la première chambre défini par le cylindre, le second passage communiquant avec une première conduite de fluide équipée d'une vanne de sécurité adoptant :
- une position ouverte à l'état inactif du dispositif sécuritaire, de manière à permettre l'évacuation du fluide de la première chambre par le second passage, lors d'un déplacement du piston en direction du fond de la première chambre et provoqué par la rotation du bras de suspension dans ledit premier sens ; et
- une position fermée à l'état actif du dispositif sécuritaire, de sorte que lors d'un déplacement du piston en direction du fond de la première chambre, provoqué par la rotation du bras de suspension dans ledit premier sens, le piston se bloque dans une position de sécurité à distance du fond de la première chambre, position dans laquelle le fluide est comprimé entre la tête de piston et la vanne de sécurité.

L'invention offre ainsi une solution simple, fiable et peu encombrante, permettant d'éviter l'abaissement accidentel du châssis sur le sol. En effet, en cas de défaillance d'un actionneur associé à l'une des roues, le poids du châssis et la charge du véhicule provoquent une rotation du bras de suspension dans le premier sens. La rotation non-désirée du bras de suspension entraîne un déplacement du piston du dispositif sécuritaire en direction du fond de la première chambre du vérin. Lorsque la tête de piston atteint le premier passage de fluide pratiqué à travers le cylindre, le fluide ne peut plus s'échapper de la première chambre du vérin, car la vanne de sécurité associée au second passage de fluide se trouve dans une position fermée, traduisant un état actif du dispositif sécuritaire. Cela conduit à un blocage du piston dans la position de sécurité à distance du fond de la première chambre, blocage entraînant l'arrêt de la rotation accidentelle du bras de suspension. Ce dernier reste alors avantageusement maintenu dans sa position de sécurité interdisant le contact entre le châssis et le sol, grâce à la mise en pression du fluide entre la tête de piston du dispositif sécuritaire, et la vanne de sécurité en position fermée.

Enfin, il est noté que la conception spécifique à l'invention se révèle également avantageuse en ce que le dispositif sécuritaire peut être commandé à distance, par exemple depuis le poste de conduite pour faciliter la procédure d'abaissement du châssis.

L'invention prévoit de préférence au moins l'une des caractéristiques optionnelles suivantes, prises isolément ou en combinaison.

Associé à chaque roue, le véhicule comporte un amortisseur agencé entre le châssis et le bras de suspension de la roue.

Selon une premier mode de réalisation de l'invention, l'amortisseur est formé par un élément distinct du dispositif sécuritaire.

Selon un second mode de réalisation préféré de l'invention, le dispositif sécuritaire est intégré à l'amortisseur, ce dernier comportant un vérin formé par le vérin du dispositif sécuritaire. En intégrant la fonction d'amortisseur au sein du dispositif sécuritaire, l'encombrement global ainsi que la masse sont encore davantage réduits.

De préférence, le vérin définit une seconde chambre séparée de la première chambre par la tête de piston, la seconde chambre communiquant avec un troisième passage de fluide à travers le cylindre, et en aval de la vanne de sécurité dans le sens d'écoulement allant du second passage vers cette vanne de sécurité, la première conduite de fluide communique d'une part avec une seconde conduite de fluide raccordée au premier passage, et d'autre part avec un circuit fluidique.

Selon une réalisation, le circuit fluidique communique avec le troisième passage de fluide à travers le cylindre.

Selon une autre réalisation, le circuit fluidique communique avec le troisième passage de fluide du vérin appartenant au dispositif sécuritaire associé à la roue du véhicule située de manière opposée selon une direction transversale du véhicule. Cela permet avantageusement de conférer une fonction antiroulis au véhicule, grâce à l'interaction entre les dispositifs sécuritaires de deux roues opposées transversalement au sein d'un même train roulant. De plus, en procédant à un rééquilibrage de la roue transversalement opposée, le risque de perte d'adhérence au niveau de la roue diamétralement opposée est également réduit.

De préférence, le circuit fluidique comporte un premier clapet anti-retour associé à un orifice de passage de fluide en compression, ainsi qu'un conduit de contournement de l'orifice de passage de fluide en compression, le conduit de contournement étant équipé d'un second clapet anti-retour associé à un orifice de passage de fluide en détente, le second clapet anti-retour autorisant un écoulement de fluide dans un sens opposé à celui du premier clapet anti-retour, et l'orifice de passage de fluide en compression présentant une section de passage différente de celle de l'orifice de passage de fluide en détente. Grâce à cette conception dans laquelle la fonction d'amortisseur est intégrée au dispositif sécuritaire, il est avantageusement obtenu un amortissement différencié en compression et en rebond.

De préférence, le circuit fluidique comporte un réservoir de fluide avec une réserve d'air.

De préférence, l'actionneur de bras de suspension est un coussin d'air d'axe longitudinal confondu avec un axe du vérin du dispositif sécuritaire, une extrémité longitudinale du coussin d'air étant solidaire de l'un des deux éléments du vérin parmi le cylindre et le piston, l'autre des deux éléments du vérin étant monté sur l'une des deux entités parmi le bras de suspension et le châssis, et l'extrémité longitudinale opposée du coussin d'air étant montée sur l'autre des deux entités parmi le bras de suspension et le châssis. Cet agencement permet avantageusement de conserver une orientation adéquate du coussin d'air pour le transfert d'efforts mécaniques entre le châssis et le bras de suspension, et ce quelle que soit la position angulaire de ce dernier.

De préférence, le vérin est un vérin hydraulique, mais d'autres technologies de vérins restent envisageables, sans sortir du cadre de l'invention.

De préférence, chaque roue comporte une jante et un pneumatique, ainsi qu'un renfort agencé autour de la jante et destiné à être contacté par une bande de roulement du pneumatique en cas de perte de pression. Ce renfort constitue avantageusement une sécurité pour éviter le risque d'abaissement accidentel du châssis sur le sol, en cas de perte de pression du pneumatique.

De préférence, le véhicule comprend au moins l'une des caractéristiques suivantes, et encore plus préférentiellement plusieurs de ces caractéristiques, voire la totalité d'entre elles :
- le véhicule comprend uniquement deux trains roulants, à savoir un train roulant avant et un train roulant arrière chacun équipé de préférence uniquement de deux roues en monte simple, chacune de ces roues étant individuellement articulée sur le châssis par son bras de suspension ;
- le véhicule présente, en configuration de roulage, une garde au sol inférieure à 500 mm ;
- en vue de dessous, le centre de gravité du véhicule chargé est situé en arrière par rapport à un milieu d'empattement entre un train roulant avant et un train roulant arrière ;
- le véhicule présente un espace de chargement de marchandises, et il forme de préférence un camion de livraison urbaine.

Selon un autre mode de réalisation préféré de l'invention, le véhicule comprend de plus, associé à chaque roue, un dispositif de blocage en rotation de son bras de suspension, le dispositif de blocage étant configuré pour empêcher la rotation du bras suspension par rapport au châssis dans les deux sens de rotation, lorsque le châssis se trouve en position basse d'appui sur le sol. Par conséquent, lorsque le sol n'est pas plan et qu'une partie du châssis seulement se retrouve en appui sur ce sol, les risques de mouvements non-désirés du châssis en position basse d'appui sont avantageusement empêchés par les dispositifs de blocage. De tels mouvements parasites du châssis sont par exemple possibles durant le chargement ou le déchargement du véhicule, du fait d'un changement de position du centre de gravité. La partie du châssis non en contact avec le sol est alors susceptible de se rapprocher du sol suite à ces mouvements parasites, avec un risque pour les personnes agencées à proximité du véhicule, comme par exemple un risque d'écrasement d'un pied entre le sol et la partie du châssis se rapprochant du sol. Grâce aux dispositifs de blocage spécifiques à ce mode de réalisation, de tels risques sont évités.

De préférence, le dispositif de blocage en rotation du bras de suspension est une vanne d'arrêt faisant partie intégrante du circuit fluidique du dispositif sécuritaire, cette vanne interdisant, dans une position d'arrêt, le déplacement du piston dans le cylindre, dans les deux sens de sa direction de coulissement. Cette conception permet au dispositif sécuritaire de remplir une autre fonction de blocage en rotation du bras de suspension en position basse d'appui du châssis, cette fonction étant combinable avec les précédentes. Néanmoins, cette fonction de blocage en rotation du bras de suspension peut être mise en oeuvre différemment, par exemple en prévoyant une vanne d'arrêt analogue sur un amortisseur distinct du dispositif sécuritaire. Selon encore une autre possibilité, un frein peut être fixé sur l'axe de rotation du bras de suspension par rapport au châssis. Dans ce cas, il peut être retenu un frein à tambour, par exemple activable par un actionneur électrique.

Selon encore un autre mode de réalisation préféré de l'invention, pour chaque roue du véhicule, dans la position haute de roulage du châssis :
- son bras de suspension présente axe de rotation de bras par rapport au châssis ;
- la roue présente un axe de rotation de roue par rapport au bras de suspension, les axes de rotation de bras et de rotation de roue étant parallèles ou sensiblement parallèles ;
- son bras de suspension présente une longueur de bras définie entre les axes de rotation de bras et de rotation de roue ;
- l'axe de rotation de bras présente une première distance verticale au sol ;
- l'axe de rotation de roue présente une seconde distance verticale au sol ; et
- la roue comprend une bande de roulement présentant un diamètre de roue.

De plus, pour toutes les roues :
- l'axe de rotation de bras est décalé longitudinalement de l'axe de rotation de roue selon un même sens ;
- la longueur de bras est la même ou sensiblement la même ;
- la première distance verticale au sol est la même ou sensiblement la même ;
- la seconde distance verticale au sol est la même ou sensiblement la même ; et
- le diamètre de roue est le même ou sensiblement le même.

Grâce à cette conception, l'abaissement du châssis vers sa position basse d'appui sur le sol ne génère pas de contrainte dans les trains roulants, et ce même lorsque les roues sont bloquées par un frein de parking. Cela s'explique par l'identité des cinématiques mises en oeuvre au niveau de chaque roue, qui confère un déport longitudinal identique ou sensiblement identique du châssis par rapport au sol, lors de l'abaissement du châssis.

Enfin, l'invention a également pour objet un procédé d'abaissement au sol d'un châssis de véhicule tel que décrit ci-dessus, comprenant une étape de basculement de la vanne de sécurité de chaque roue de sa position fermée à sa position ouverte, puis une étape de commande des actionneurs pour entraîner l'abaissement du châssis en direction du sol.

De préférence, le procédé d'abaissement est mis en oeuvre pour un véhicule comprenant uniquement deux trains roulants, à savoir un train roulant avant et un train roulant arrière, chaque roue des trains roulants étant associée à un frein de parking, le procédé comprenant les étapes successives suivantes :
- lorsque le châssis se trouve en position haute de roulage, actionnement du frein de parking uniquement pour toutes les roues de l'un des deux trains roulants ;
- abaissement du châssis jusqu'à sa position basse d'appui sur le sol ; et
- actionnement du frein de parking pour toutes les roues de l'autre des deux trains roulants.

Ce procédé permet également de réaliser l'abaissement du châssis vers sa position basse d'appui sur le sol, sans générer de contrainte dans les trains roulants grâce à la gestion séquencée du frein de parking sur les roues. L'abaissement du châssis peut ainsi être réalisé sans contrainte, quelle que soit la cinématique associée à chacun des bras de suspension, et ce avec la garantie que le véhicule reste à l'arrêt grâce au frein de parking appliqué aux roues de l'un des deux trains roulants pendant cet abaissement.

D'autres avantages et caractéristiques de l'invention apparaîtront dans la description détaillée non limitative ci-dessous.

Cette description sera faite au regard des dessins annexés parmi lesquels ;
[Fig. 1] représente une vue schématique de côté d'un véhicule selon l'invention, avec son châssis en position haute de roulage ;
[Fig. 2] représente une vue similaire à la précédente, avec le châssis en position basse d'appui sur le sol ;
[Fig. 3] représente une vue de dessous du véhicule montré sur les figures 1 et 2 ;
[Fig. 4] représente une vue de côté plus détaillée d'une partie du véhicule selon un premier mode de réalisation préféré de l'invention, avec le châssis en position haute de roulage ;
[Fig. 5] représente un dispositif sécuritaire pour éviter les risques d'abaissement accidentel du châssis sur le sol, le dispositif sécuritaire étant associé à la roue montrée sur la figure 4, et représenté dans un état actif tel qu'adopté avec le châssis en position haute de roulage de la figure 4 ;
[Fig. 6] représente une vue similaire à celle de la figure 4, avec le bras de suspension de roue se trouvant dans une position de sécurité ;

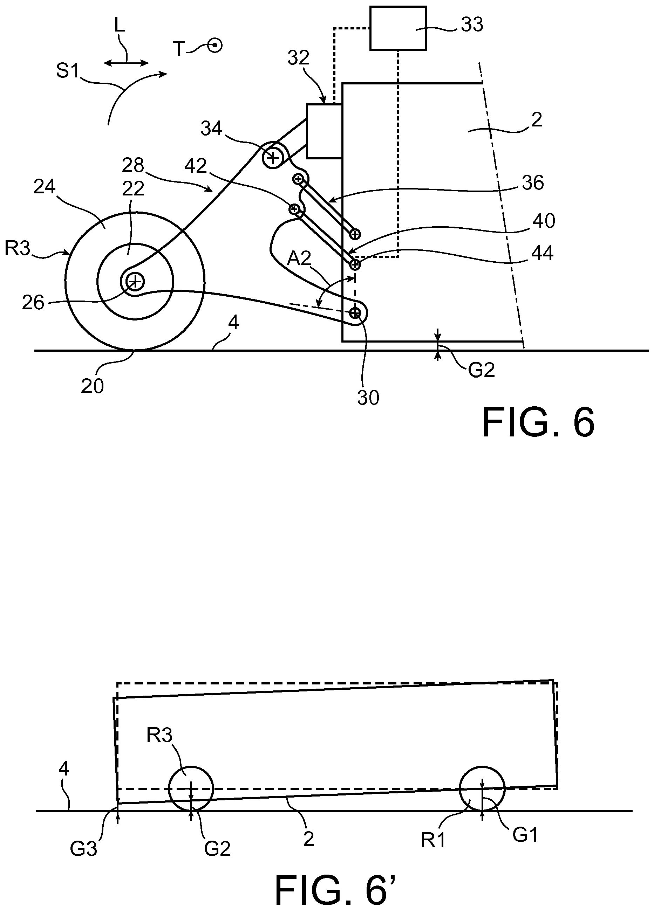

[Fig. 6'] représente une vue schématique de côté du véhicule, en cas de défaillance de l'actionneur associé à l'une des roues arrière de ce véhicule ;

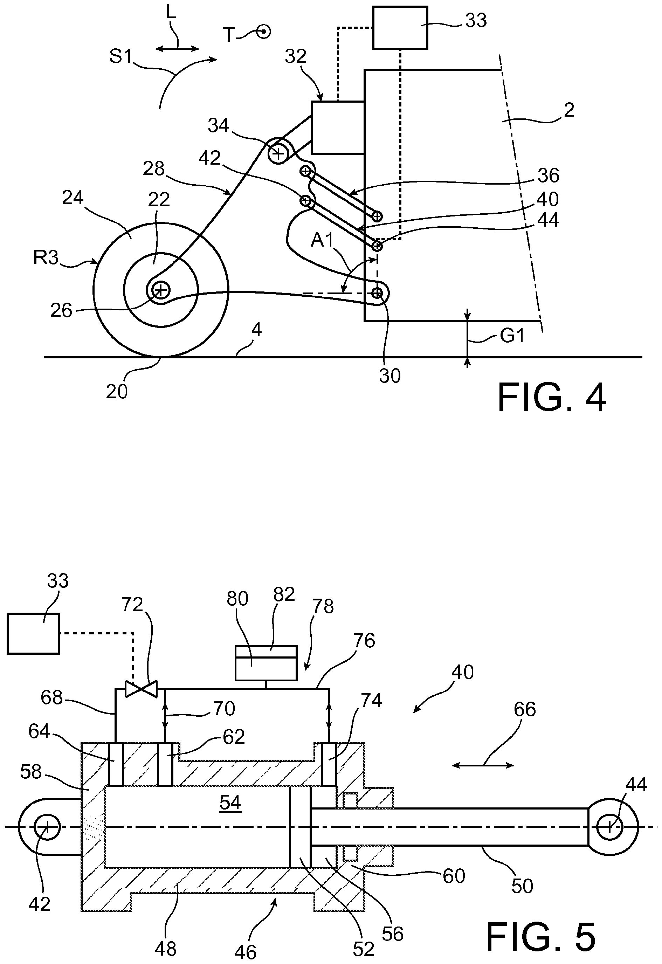

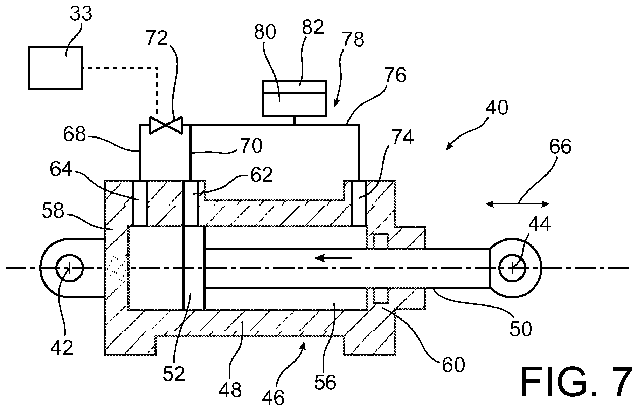

[Fig. 7] représente une vue similaire à celle de la figure 5, avec le dispositif sécuritaire représenté dans un état actif tel qu'adopté lorsque le bras de suspension occupe sa position de sécurité de la figure 6 ;

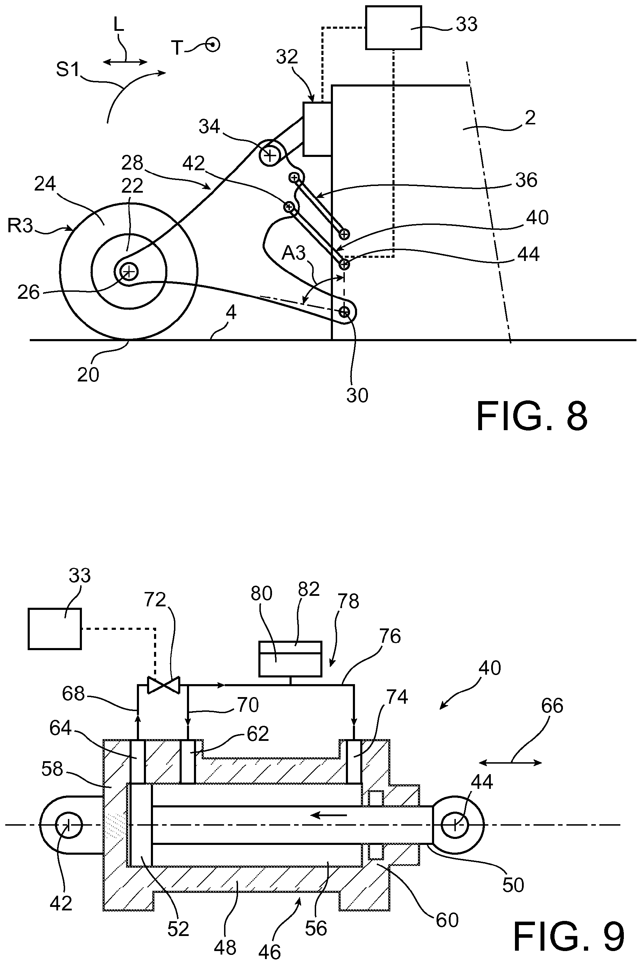

[Fig. 8] représente une vue similaire à celle de la figure 6, avec le châssis se trouvant dans sa position basse d'appui sur le sol ;
[Fig. 9] représente une vue similaire à celle de la figure 7, avec le dispositif sécuritaire représenté dans un état inactif tel qu'adopté lorsque le châssis occupe sa position basse d'appui de la figure 8 ;

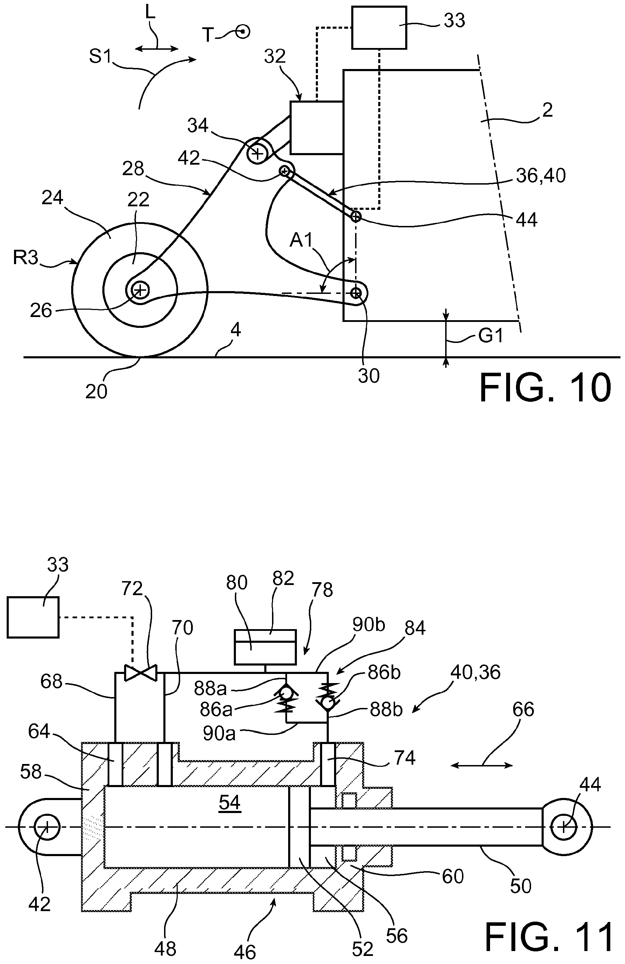

[Fig. 10] représente une vue similaire à celle de la figure 4, avec le véhicule se trouvant selon un second mode de réalisation préféré de l'invention ;
[Fig. 11] représente le dispositif sécuritaire associé à la roue montrée sur la figure 10, et représenté dans un état actif tel qu'adopté avec le châssis en position haute de roulage de la figure 10 ;

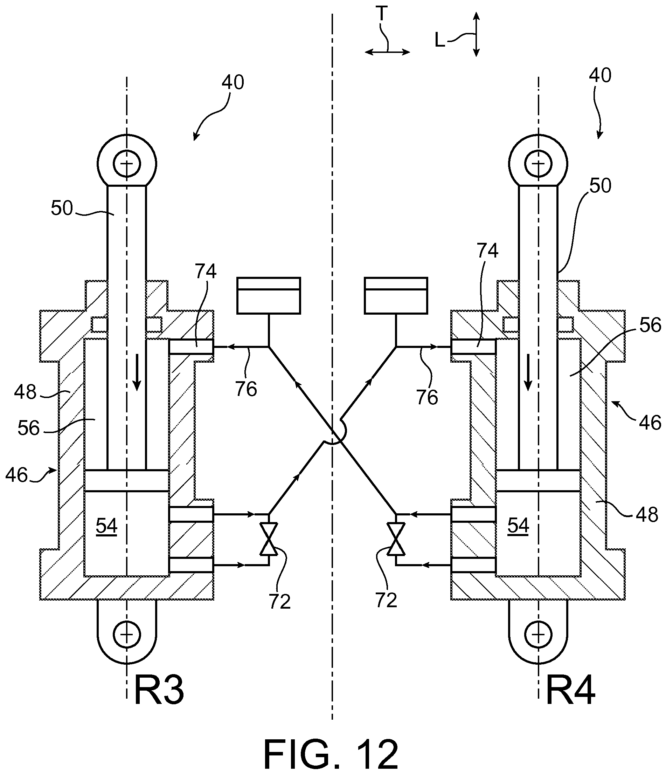

[Fig. 12] représente une vue schématique d'une autre réalisation dans laquelle les dispositifs de sécurité, associés au roues du véhicule, coopèrent ensemble pour assurer une fonction antiroulis ;

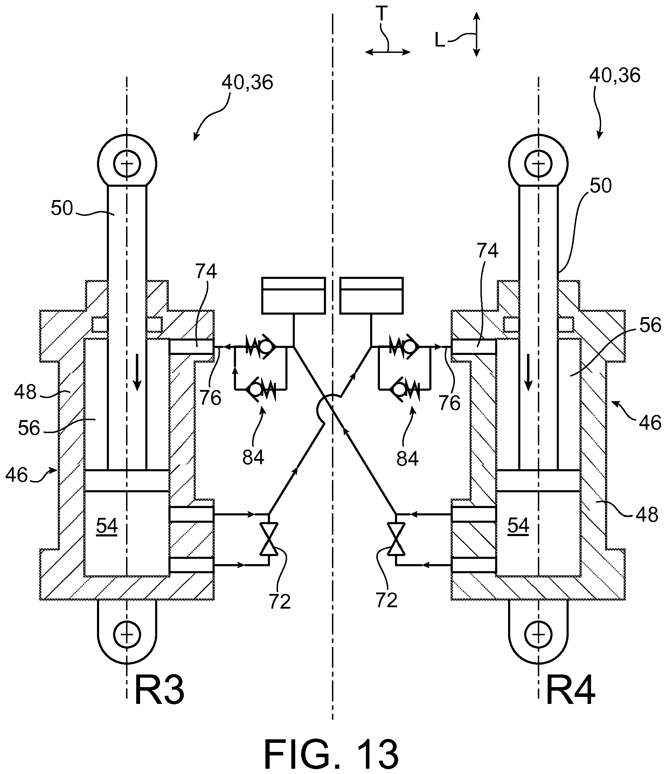

[Fig. 13] est une vue schématique similaire à celle de la figure 12, avec les dispositifs de sécurité intégrant également la fonction d'amortisseur ;

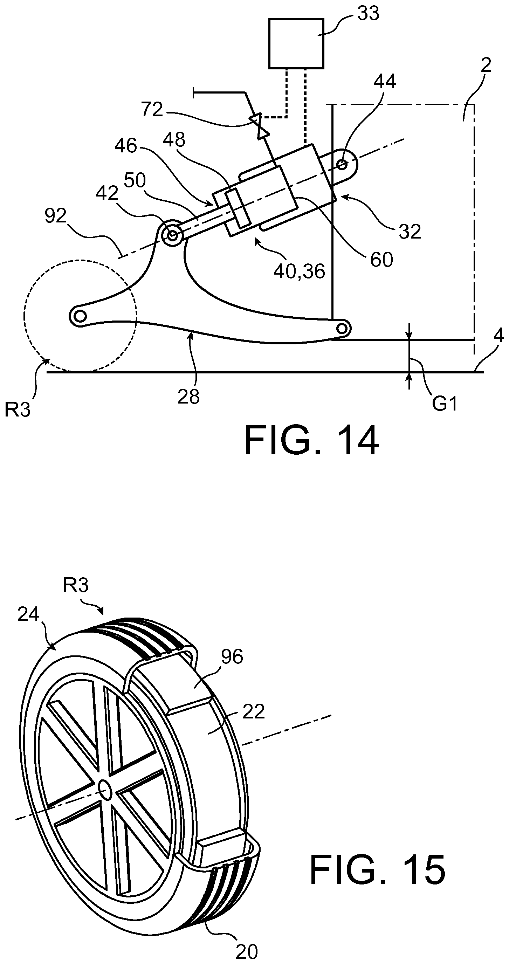

[Fig. 14] représente une vue similaire à celle de la figure 4, avec le dispositif sécuritaire et l'actionneur intégré au sein d'un même ensemble, ce dernier pouvant également intégrer l'amortisseur ;
[Fig. 15] représente une vue en perspective de l'une des roues du véhicule, selon une réalisation améliorée ;

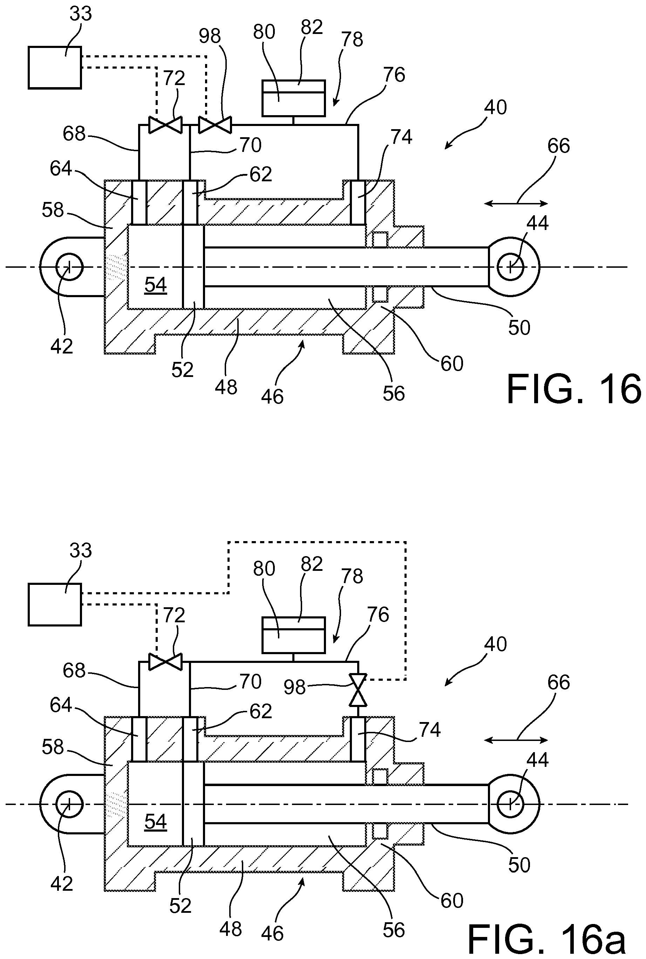

[Fig. 16] représente une vue similaire à celle de la figure 5, avec le dispositif sécuritaire intégrant une fonction supplémentaire de blocage en rotation du bras de suspension de roue ;
[Fig. 16a] est une vue similaire à celle de la figure 16, avec le dispositif sécuritaire se présentant selon une alternative ;

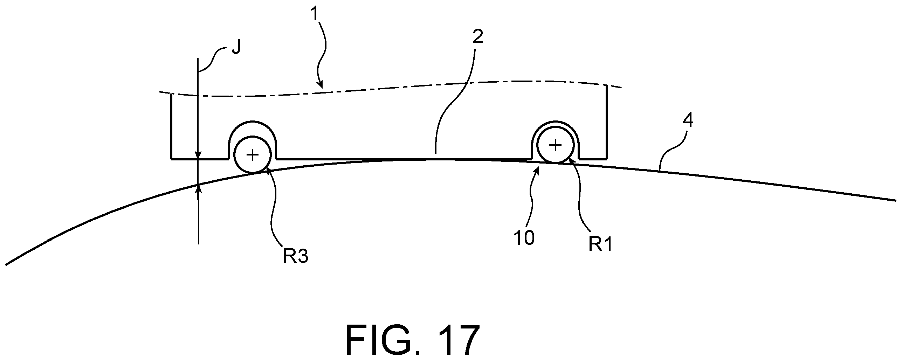

[Fig. 17] représente le véhicule avec son châssis en position basse d'appui sur un sol bombé ;

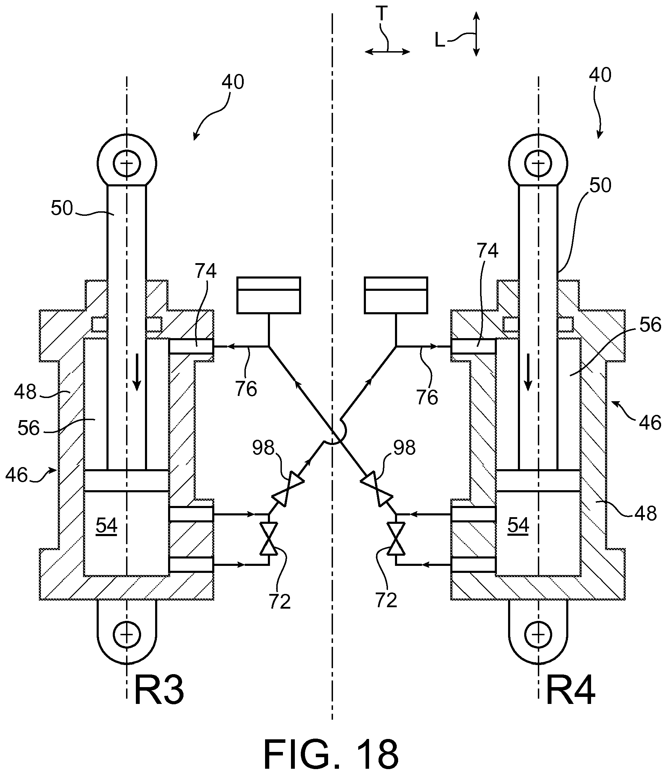

[Fig. 18] représente une vue similaire à celle de la figure 12, avec les dispositifs sécuritaires intégrant une fonction supplémentaire de blocage en rotation du bras de suspension de roue ;

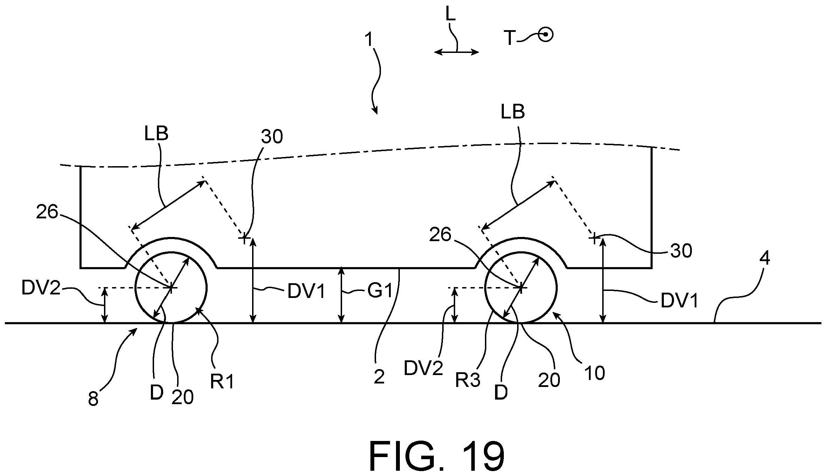

[Fig. 19] est une vue schématique de côté du véhicule, avec son châssis en position haute de roulage ; et

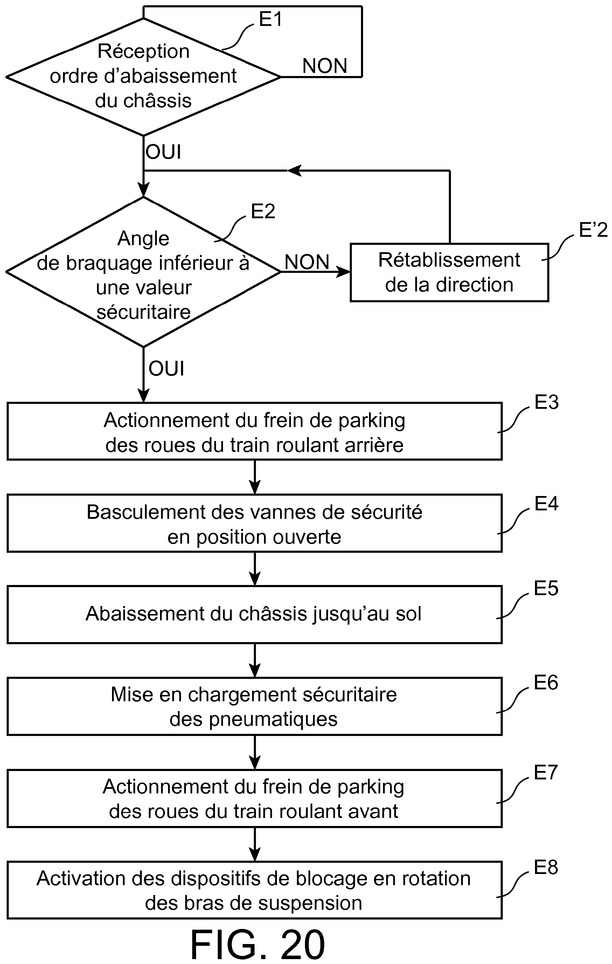

[Fig. 20] est une vue schématique représentant différentes étapes d'un procédé d'abaissement du châssis montré sur les figures précédentes.

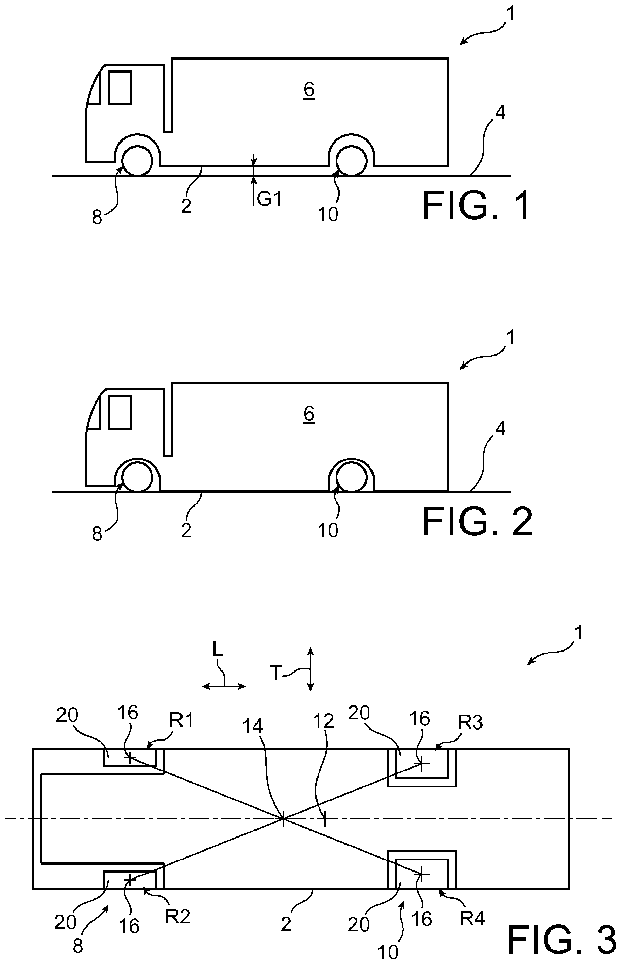

En référence tout d'abord aux figures 1 à 3, il est représenté un véhicule 1 selon l'invention, du type comprenant un châssis 2 à position verticale commandée. Le véhicule 1, ici de préférence un camion de livraison urbaine, comporte en effet un châssis 2 qui peut être relevé dans une position haute de roulage telle que montrée sur la figure 1, et abaissé dans une position basse d'appui sur le sol 4, telle que montrée sur la figure 2. Il peut néanmoins s'agir d'autres types de véhicules, de préférence des véhicules de transport sur route.

Le châssis 2, également dénommé « caisse », porte ou délimite un espace de chargement 6 des marchandises. Par exemple, cet espace 6 est délimité vers le bas par le châssis 2, pour se retrouver au plus près du sol en position basse d'appui du châssis.

En position haute de roulage, la garde au sol G1 du châssis 2 reste modérée, de manière à limiter la course verticale requise pour atteindre la position basse d'appui sur le sol, adoptée pour le déchargement des marchandises. Typiquement, cette garde au sol G1 est inférieure à 500 mm, et de préférence comprise entre 150 et 500 mm.

Le véhicule 1 comprend uniquement deux trains roulants, à savoir un train roulant avant 8, et un train roulant arrière 10. Chacun des deux trains est équipé uniquement de deux roues en monte simple, chacune de ces roues étant individuellement articulée sur le châssis 2 par un bras de suspension, comme cela sera décrit ci-après. Néanmoins, si chaque roue est ici associée à un unique bras de suspension, la conception peut être plus complexe. En effet, il peut par exemple être prévu un train avant où les deux roues sont sur un même essieu, lui-même articulé par des bras de suspension « poussés » ou « tirés », en général au nombre de deux par roue et montés en haut et en bas de l'essieu pour créer une cinématique en parallélogramme. Ainsi, chacune des roues peut être individuellement, ou par paire, articulée sur le châssis 2 par au moins un bras de suspension en configuration « poussée » ou « tirée ».

Le train avant 8 comprend ainsi une roue avant gauche R1 et une roue avant droite R2, tandis que le train arrière 10 comprend une roue arrière gauche R3 et une roue arrière droite R4.

L'espace de chargement 6 présente une zone étendue de porte-à-faux arrière. En pratique, cela conduit à observer, en vue de dessous telle que montrée sur la figure 3, que la projection verticale du centre de gravité 12 du véhicule chargé est situé à l'arrière d'un croisement 14 entre les deux diagonales reliant les centres 16 des bandes de roulement 20 des roues avant et arrière R1-R4. En d'autres termes, le centre de gravité 12 du véhicule chargé est situé en arrière par rapport à un milieu d'empattement entre les deux trains roulants 8, 10. Par « véhicule chargé », il est ici entendu que son espace de chargement 6 est occupé en totalité par des marchandises présentant toutes une même masse surfacique.

L'éloignement longitudinal du centre de gravité 12, par rapport au milieu d'empattement correspondant au croisement 14 entre les diagonales, peut être de l'ordre de 50 cm à 1 m, et s'étendre jusqu'à 2 m. A cet égard, il est noté que le véhicule 1 présente une direction longitudinale référencée « L » sur les figures, ainsi qu'une direction transversale référencée « T ».

En référence à présent à la figure 4, il est représenté un assemblage entre l'une des roues du véhicule, et le châssis 2. Ici, il s'agit de la roue arrière gauche R3, mais il est entendu que l'assemblage est identique ou similaire pour chacune des quatre roues R1-R4. Aussi, seul l'assemblage de la roue R3 sera décrit ci-après.

Tout d'abord, il est noté que la roue R3 comporte une jante 22, ainsi qu'un pneumatique 24 agencé autour de la jante. C'est le pneumatique 24 qui définit la bande de roulement 20. La jante 22 est articulée selon un axe de rotation de roue 26 sur un bras de suspension 28, de forme générale rectangulaire. L'articulation de la roue R3 s'effectue au niveau de l'un des sommets du bras 28. Ce dernier est monté pivotant au niveau d'un autre de ses sommets sur le châssis 2, selon un axe de rotation de bras 30 parallèle ou sensiblement parallèle à l'axe de rotation de roue 26. Au niveau du troisième sommet du bras de suspension 28, il est articulé une extrémité d'un actionneur 32 du bras de suspension. Cette articulation s'effectue selon un axe de rotation d'actionneur 34, parallèle aux axes 26, 30. A son extrémité longitudinale opposée, l'actionneur 32 est en appui sur le châssis 2, ou également articulé sur celui-ci. Cet actionneur 32 permet de commander la position angulaire du bras de suspension 28 relativement au châssis 2, afin de faire varier de la manière désirée la position verticale de ce châssis.

L'actionneur 32 est ici du type coussin d'air. C'est le contrôle de sa pression interne qui permet d'ajuster son étendue longitudinale entre le bras 28 et le châssis 2, étendue qui détermine la position angulaire de ce bras 28. Cette pression est régulée par une unité de contrôle 33 du véhicule, unité qui peut être commune aux quatre roues, tout en étant capable de délivrer des signaux de commande différents en fonction des roues.

Sur la figure 4, la position angulaire du bras de suspension 28 est telle qu'il forme un angle A1 relativement au châssis 2, cet angle A1 étant déterminé en vue de côté entre la normale au châssis ou la verticale, et une droite fictive reliant les deux axes 26, 30. L'angle A1 adopté pendant le roulage du véhicule est par exemple de l'ordre de 90°, mais il peut bien évidemment être inférieur ou supérieur. D'ailleurs, le bras de suspension 28 étant préférentiellement amorti, la valeur de l'angle A1 varie au cours des phases d'amortissement rencontrées durant le roulage. Pour réaliser cet amortissement du bras de suspension 28, il est prévu un amortisseur 36, de conception quelconque et connue de l'homme du métier. Les extrémités opposées de l'amortisseur 36 sont articulées sur le bras 28 et le châssis 2, selon des axes également parallèles aux axes 26, 30, 34.

Enfin, l'assemblage est complété par un dispositif sécuritaire spécifique à l'invention, référencé 40 sur la figure 4. Ce dispositif sécuritaire est capable de limiter l'abaissement accidentel du châssis 2 sur le sol 4, en adoptant un état actif dans lequel il limite la rotation du bras de suspension autour de l'axe 30, selon un premier sens de rotation S1 correspondant au sens horaire sur la figure 4. C'est effectivement dans ce sens de rotation que le bras 28 conduit à l'abaissement du châssis 2 en direction du sol 4.

Le dispositif sécuritaire 40, représenté uniquement schématiquement sur la figure 4, est également articulé à ses deux extrémités opposées sur le châssis 2 et sur le bras de suspension 28, selon des axes de rotation 42, 44 parallèles aux axes 26, 30, 34. Ici, le dispositif sécuritaire 40 est distinct de l'amortisseur 36, mais ces deux équipements peuvent avantageusement être fusionnés, comme cela sera décrit ultérieurement.

En référence à présent à la figure 5, il est représenté le dispositif sécuritaire 40 de manière plus détaillée, toujours dans son état actif interdisant l'abaissement accidentel du châssis sur le sol. Il comporte un vérin hydraulique 46 dont un cylindre 48 est monté articulé sur le bras de suspension 28 selon l'axe de rotation 42, et dont un piston 50 est monté articulé sur le châssis 2 selon l'axe 44, ou inversement. La tête de piston 52 délimite de part et d'autre de celle-ci une première chambre d'huile 54, et une seconde chambre d'huile 56. La première chambre 54 est également définie par un fond de première chambre 58, tandis que la seconde chambre 56 est également définie par un fond de seconde chambre 60 traversé par la tige du piston 50.

La première chambre 54 communique avec un premier passage d'huile 62 réalisé latéralement à travers le cylindre 48. Elle communique également avec un second passage d'huile 64 réalisé à travers le cylindre 48, ce second passage se trouvant proche du fond de première chambre 58, et quoi qu'il en soit plus proche de ce fond 58 que ne l'est le premier passage 62. Les deux passages 62, 64 sont en effet espacés l'un de l'autre selon une direction de coulissement 66 du piston dans le cylindre. Le second passage 64 communique avec une première conduite d'huile 68, tandis que le premier passage 62 communique avec une seconde conduite d'huile 70 raccordée à l'extrémité de la première conduite 68. En amont de ce raccordement, la première conduite 68 est équipée d'une vanne de sécurité 72, cette vanne pouvant être manuelle, mais étant préférentiellement une électrovanne commandée par l'unité de contrôle 33.

De son côté, la seconde chambre 56 communique avec un troisième passage d'huile 74 réalisé latéralement à travers le cylindre 48, ce troisième passage étant préférentiellement agencé à proximité du fond de la seconde chambre 60. Le troisième passage 74 communique avec l'extrémité d'une troisième conduite d'huile 76, appartenant à un circuit fluidique 78, qui va être décrit ci-après. En effet, en aval de la vanne de sécurité 72 dans le sens d'écoulement d'huile allant du second passage 64 vers cette vanne de sécurité 72, la première conduite de fluide communique non seulement avec la seconde conduite 70 raccordée au premier passage 62, mais également avec l'autre extrémité de la troisième conduite d'huile 76 appartenant au circuit fluidique 78. Ce dernier est complété par un piquage sur la troisième conduite 76, entre ses deux extrémités, piquage qui mène à un réservoir d'huile 80 ménageant dans sa partie supérieure une réserve d'air 82.

Dans l'état actif du dispositif sécuritaire 40 tel que montré sur la figure 5, la vanne 72 est maintenue en position fermée. Dans cet état, l'huile ne peut transiter par le second passage 64, en raison de la fermeture de la vanne 72. En revanche, l'huile peut librement circuler entre les deux chambres 54, 56 via le premier orifice 62, la seconde conduite 70, la troisième conduite 76, et le troisième passage 74. Par conséquent, le piston 50 peut accompagner les mouvements de l'amortisseur au cours du roulage, par déplacement de sa tête de piston 52 entre les premier et troisième passages 62, 74. Surtout, dans cet état actif du dispositif sécuritaire 40, le piston 50 est capable de stopper sa course selon la direction 66 pour éviter un abaissement trop important du châssis, et ainsi éviter son impact non-désiré sur le sol durant le roulage. Plus précisément, en cas de défaillance de l'actionneur associé à la roue R3, le poids du châssis 2 et la charge du véhicule provoquent une rotation du bras de suspension 28 selon l'axe 30 dans le premier sens S1, schématisé par la flèche sur la figure 6. La rotation non-désirée du bras de suspension 28 entraîne un déplacement de la tête de piston 52 en direction du fond 58, chassant l'huile de la première chambre 54 via le premier passage 62, en direction de la seconde chambre 56 via les conduites 70, 76 et le troisième passage 74.

Lorsque la tête de piston 52 atteint le premier passage 62 pratiqué à travers le cylindre 48, l'huile ne peut plus s'échapper de la première chambre 54 par ce même passage 62 du fait de son obturation par la tête de piston, de même que l'huile ne toujours pas non plus s'échapper par le second passage 64, en raison de la fermeture de la vanne de sécurité 72. Le piston 50 se trouve ainsi bloqué dans une position de sécurité telle que montrée sur la figure 7, à distance du fond 58, grâce à la mise en pression de l'huile entre la tête de piston 52 et la vanne 72.

Ce blocage du piston 50 dans la position de sécurité entraîne avantageusement l'arrêt de la rotation accidentelle du bras de suspension 28 par rapport au châssis 2, dans le sens S1. Ce bras 28 reste alors maintenu dans sa position de sécurité montrée sur la figure 6, qui ménage localement une garde au sol G2 non-nulle afin d'éviter le contact accidentel avec le sol. Dans cette position angulaire du bras 28, ce dernier forme un angle A2 avec la normale au châssis 2, cet angle A2 étant évidemment inférieur à l'angle A1 décrit précédemment en référence à la figure 4.

Il est noté qu'en cas de défaillance de l'actionneur associé à l'une des roues arrière R3, le châssis 2 a tendance à s'incliner par rapport au sol 4, comme cela a été schématisé sur la figure 6'. La partie arrière en porte-à-faux doit également éviter d'entrer en contact avec le sol 4. Par conséquent, la garde au sol G2 procurée localement au niveau de la roue arrière R3, grâce à son dispositif sécuritaire, doit être suffisante pour conserver une garde au sol G3 non nulle à l'extrémité arrière de la partie arrière en porte-à-faux du véhicule. En outre, la valeur théorique de G2 pour conserver une garde sol G3 non nulle peut en pratique être majorée, de manière à tenir compte d'éventuels mouvements dynamiques du véhicule, lors de son roulage dans de telles conditions de défaillance de l'actionneur de la roue arrière. La valeur théorique de G2 peut par exemple être majorée de 10, 40 ou 60 %, et il est ainsi tenu compte de cette majoration dans la conception des dispositifs sécuritaires associés aux roues. Un raisonnement analogue est effectué pour éviter les risques de contact de la partie avant en porte-à-faux du véhicule, avec le sol, lors d'une défaillance d'un actionneur associé à une roue avant.

Le dispositif sécuritaire 40 peut alternativement adopter un état inactif tel que représenté sur les figures 8 et 9, dans lequel la vanne 72 est en position ouverte. Dans cet état adopté pour abaisser volontairement le châssis 2 sur le sol, l'huile peut s'extraire de la première chambre 54 même après le passage de la tête de piston par le premier passage 62, via le second passage 64 situé à proximité du fond 58. Cela permet une course supplémentaire du piston 50 au-delà du premier passage 62, pour accompagner une rotation additionnelle du bras 28 permettant d'amener le châssis 2 jusqu'au sol 4.

Lorsque le châssis 2 atteint le sol, le bras 28 se trouve dans une position angulaire telle qu'il forme un angle A3 avec la normale au châssis 2, cet angle A3 montré sur la figure 8 étant évidemment inférieur à l'angle A2 décrit précédemment en référence à la figure 6.

En référence à présent aux figures 10 et 11, il est représenté un second mode de réalisation préféré dans lequel le dispositif sécuritaire 40 est intégré à l'amortisseur 36, ou inversement. En d'autres termes, un seul ensemble remplit les deux fonctions de sécurité et d'amortissement, cet ensemble étant articulé à ses extrémités en deux points respectivement sur le bras de suspension 28 et le châssis 2, selon les axes 42, 44. Pour aboutir à cet ensemble remplissant les deux fonctions, le vérin de l'amortisseur est formé par le vérin 46 du dispositif sécuritaire 40, ou inversement.

Le second mode de réalisation reprend les mêmes caractéristiques que celles du premier mode, auxquelles sont ajoutés des équipements au sein du circuit fluidique 78. La troisième conduite 76 de ce circuit est en effet équipée d'une boucle 84 agencée entre le piquage du réservoir 80, et son raccordement au troisième passage 74. Cette boucle 84 intègre des éléments pour remplir la fonction d'amortisseur. A cet effet, elle intègre au sein d'un conduit principal 90a un premier clapet anti-retour 86a, associé à un orifice de passage de fluide en compression 88a. La boucle comporte également un conduit 90b de contournement de l'orifice de passage de fluide en compression 88a, ce conduit 90b étant équipé d'un second clapet anti-retour 86b associé à un orifice de passage de fluide en détente 88b.

Avec cet agencement, le second clapet anti-retour 86b autorise un écoulement d'huile dans un sens opposé à celui du premier clapet anti-retour 86a. Par conséquent, pendant la phase d'amortissement, l'huile emprunte le conduit principal 90a, tandis que pendant la phase de rebond, l'huile emprunte le conduit de contournement 90b. Lors de la phase de compression, l'huile transite par l'orifice de passage de fluide en compression 88a, qui est calibré de manière à assurer une dissipation d'énergie et un amortissement par laminage de l'huile. De manière analogue, en détente, l'amortissement est déterminé par le passage de l'huile dans l'autre orifice de passage 88b. Par conséquent, en prévoyant que les deux orifices 88a, 88b présentent des sections de passage différentes, il est avantageusement obtenu un amortissement différencié en compression et en rebond.

Selon une autre réalisation montrée sur la figure 12, les dispositifs sécuritaires 40 des différentes roues du véhicule peuvent coopérer deux à deux pour conférer une fonction antiroulis. La figure 12 montre la coopération des dispositifs 40 pour les deux roues R3, R4 du train roulant arrière, mais une coopération identique ou similaire peut être adoptée pour les deux roues du train roulant avant.

Plus précisément, l'extrémité de la troisième conduite 76 du dispositif sécuritaire 40 associé à la roue arrière gauche R3 ne communique plus avec le troisième passage 74 du vérin 46 de ce dispositif 40, mais elle communique avec le troisième passage 74 du vérin 46 appartenant au dispositif sécuritaire 40 associé à la roue arrière droite R4, opposée transversalement à la roue arrière gauche R3. Par conséquent, lorsque le piston 50 de la roue arrière droite R4 descend dans son cylindre 48 suite à une rotation du bras de suspension de cette roue R4, l'huile de la première chambre du vérin 54 associé à la roue R4 est chassée en direction de la seconde chambre 56 du vérin associé à l'autre roue R3. Simultanément, l'huile de la première chambre du vérin 54 associé à la roue R3 est chassée en direction de la seconde chambre 56 du vérin associé à la roue R4. Il se produit donc également une descente de piston 50 du vérin associé à la roue R3, qui évite ou limite les mouvements parasites de roulis sur le véhicule.

Une telle fonctionnalité se révèle encore davantage pertinente lorsque les dispositifs sécuritaires 40 intègrent également la fonction d'amortisseur, comme cela a été représenté sur la figure 13. Selon une alternative de réalisation montrée sur la figure 14, applicable à tous les modes et toutes les réalisations décrites, l'actionneur 32 en forme de coussin d'air est intégré à un ensemble incorporant le dispositif sécuritaire 40, avec ce dernier pouvant également incorporer la fonction d'amortissement au sens décrit en référence aux figures 10 et 11.

Pour ce faire, l'axe longitudinal 92 du coussin d'air est confondu avec un axe du vérin 46 du dispositif sécuritaire 40. De plus, une extrémité longitudinale du coussin d'air 32 est solidaire du cylindre 48, tandis que son extrémité longitudinale opposée est montée pivotante sur le châssis 2, selon l'axe de rotation 44. Le piston 50 a quant à lui sa tige montée pivotante sur le bras de suspension 28, selon l'axe de rotation 42. Avec cet agencement particulier, la face d'appui du cousin d'air 32 reste en permanence centrée sur le cylindre 48, et plus particulièrement sur le fond 60 de la seconde chambre du vérin. Le coussin d'air 32 reste ainsi aligné en permanence avec le vérin 46, ce qui garantit un transfert optimal d'efforts mécaniques entre le châssis 2 et le bras de suspension 28, quelle que soit la position angulaire de ce dernier.

En référence à présent à la figure 15, il est montré une réalisation améliorée de l'une des roues. Il s'agit de la roue R3, mais toutes les roues du véhicule peuvent être réalisées de la sorte. Cette roue R3 comporte, en plus de la jante 22 et du pneumatique 24 définissant la bande de roulement 20, un renfort 96 agencé radialement autour de la jante. Le renfort 96 est destiné à être contacté par une partie intérieure de la bande de roulement 20 du pneumatique, en cas de perte de pression, évitant ainsi le contact direct entre le pneumatique 24 et la jante 22. Il est conçu rigide pour ne pas s'affaisser sous le poids du véhicule, participant ainsi à éviter le risque d'abaissement accidentel du châssis sur le sol, en cas de perte de pression du pneumatique, par exemple suite à une crevaison.

De manière préférentielle, dans la conception des dispositifs sécuritaires 40, il peut également être tenu compte de l'éventuel affaissement du châssis provoqué par une perte de pression du pneumatique. Ainsi, la garde au sol G2 procurée localement au niveau de la roue par son dispositif sécuritaire est préférentiellement supérieure à l'amplitude maximale d'affaissement de la roue, suite à une perte de pression dans son pneumatique qui peut résulter d'un dégonflage ou d'un éclatement. De même, les principes exposés ci-dessus en référence à la figure 6' sont également applicables à une situation de cumul d'une défaillance d'un actionneur associé à l'une des roues, et d'une perte de pression dans cette roue conduisant à un roulage sur le renfort 96. En d'autres termes, il est fait en sorte que la valeur de la garde au sol G2 procurée localement au niveau de la roue arrière R3 par son dispositif sécuritaire, soustraite de la valeur d'amplitude maximale d'affaissement de la roue suite à une perte de pression dans son pneumatique, soit suffisante pour conserver une garde au sol G3 non nulle à l'extrémité arrière de la partie arrière en porte-à-faux du véhicule. Ici encore, une condition analogue est posée pour les roues avant.

En référence à la figure 16, il est représenté un troisième mode de réalisation préféré de l'invention, dans lequel chaque roue est associée à un dispositif de blocage en rotation du bras de suspension de roue, ce dispositif de blocage étant ici intégré au dispositif sécuritaire 40. Il prend la forme d'une vanne d'arrêt 98, de préférence une électrovanne commandée par l'unité de contrôle. Une vanne d'arrêt à actionnement manuel est également envisageable, sans sortir du cadre de l'invention.

La vanne d'arrêt 98 est agencée au sein du circuit fluidique 78, sur la troisième conduite 76 à proximité du raccordement avec les première et seconde conduites 68, 70.

Lorsque la vanne d'arrêt 98 est en position d'arrêt, et que la vanne de sécurité 72 adopte également sa position fermée, aucune communication de fluide n'est possible entre les deux chambres 54, 56 du vérin 46. Par conséquent, dès que ces deux vannes 72, 98 sont fermées, le piston 50 reste bloqué dans sa position au sein du cylindre 48. En d'autres termes, le piston 50 ne peut plus se déplacer selon la direction de coulissement 66, quel que soit le sens de déplacement. Le blocage en position du piston 50 provoque le blocage en rotation du bras de suspension par rapport au châssis, dans les deux sens de rotation. Cette fonctionnalité est particulièrement intéressante lorsque le châssis 2 se trouve dans sa position basse d'appui sur un sol 4 qui n'est pas plan. Une telle situation a été représentée schématiquement sur la figure 17, montrant la partie avant du châssis 2 au contact du sol, tandis que sa partie arrière reste à distance du sol en raison du caractère bombé de la route. Dans une cette situation, il existe un risque de déplacement du centre de gravité du véhicule, par exemple au fur et à mesure du déchargement des marchandises. Ce déplacement du centre de gravité peut provoquer un basculement non-désiré du châssis 2, par exemple conduisant à consommer le jeu initial J entre le châssis 2 et le route bombée 4. Un tel basculement parasite engendrerait un risque pour les personnes agencées à proximité de la partie avant du châssis du véhicule, comme par exemple un risque d'écrasement de pied entre le sol et cette partie avant du châssis se rapprochant du sol.

Or grâce aux vannes d'arrêt 98, équipant préférentiellement le dispositif sécuritaire 40 de chacune des roues, de tels risques sont évités pour les personnes situées à proximité du véhicule. Il est noté que la vanne d'arrêt 98 peut être agencée à un autre endroit sur la troisième conduite 76, par exemple à proximité du troisième passage d'huile 74 à travers le cylindre 48, comme cela a été représenté sur la figure 16a. D'ailleurs, ce principe d'implantation de la vanne d'arrêt 98 pour le blocage en rotation du bras de suspension s'applique également aux cas où le dispositif sécuritaire 40 intègre la fonction d'amortisseur décrite en référence à la figure 11. Dans ce cas, la vanne d'arrêt 98 peut être implantée en amont ou en aval de la boucle 84, sans sortir du cadre de l'invention.

Ce principe d'implantation de la vanne d'arrêt 98 pour le blocage en rotation du bras de suspension est aussi applicable aux cas où le dispositif sécuritaire 40 intègre la fonction antiroulis, comme cela a été schématisé sur la figure 18.

A titre d'exemple, l'invention prévoit au moins un mode de réalisation dans lequel le dispositif sécuritaire associé à chaque roue intègre plusieurs des fonctions additionnelles décrites précédemment, voire la totalité de celles-ci, à savoir la fonction d'amortisseur, la fonction antiroulis, la fonction d'intégration de l'actionneur, et la fonction de blocage en rotation du bras de suspension par blocage en translation du piston.

D'autres caractéristiques préférentielles de l'invention vont être décrites ci-dessous, et elles sont bien évidemment combinables avec celles décrites précédemment.

Tout d'abord en référence à la figure 19, il est montré le véhicule 1 en configuration de roulage, c'est-à-dire avec son châssis 2 en position haute de roulage définissant la garde au sol G1. La particularité du véhicule réside dans le fait que la cinématique associée à chacune des quatre roues est identique. Plus précisément, ces cinématiques identiques permettent d'engendrer un déport longitudinal identique ou sensiblement identique du châssis 2 par rapport au sol 4, lors de l'abaissement de ce châssis. Grâce à cette conception, l'abaissement du châssis vers sa position basse d'appui sur le sol ne génère pas de contrainte dans les trains roulants 8, 10, même lorsque toutes les roues sont bloquées par un frein de parking au cours de cet abaissement.

Pour chacune des quatre roues R1-R4 (seules les deux roues R1 et R3 étant visibles sur la vue de côté de la figure 19), dans la position haute de roulage du châssis, il est observé les caractéristiques suivantes :
- le bras de suspension 28 présente une longueur de bras « LB » définie entre les deux axes de rotation 26, 30 ;
- l'axe de rotation de bras 30 présente une première distance verticale au sol « DV1 » ;
- l'axe de rotation de roue 26 présente une seconde distance verticale au sol « DV2 » inférieure à la première ; et
- la roue comprend une bande de roulement 20 présentant un diamètre de roue « D ».

Ainsi, pour éviter l'introduction de contraintes dans les trains roulants 8, 10 lors de l'abaissement du châssis, il est prévu que pour les quatre roues :
- l'axe de rotation de bras 30 est décalé longitudinalement de l'axe de rotation de roue 26 selon un même sens, ici vers l'arrière amenant à une configuration à bras « poussé », même si une configuration inverse à bras « tiré » est également envisageable, sans sortir du cadre de l'invention ;
- la longueur de bras LB est la même ou sensiblement la même ;
- la première distance verticale au sol DV1 est la même ou sensiblement la même ;
- la seconde distance verticale au sol DV2 est la même ou sensiblement la même ; et
- le diamètre de roue D est le même ou sensiblement le même.

Lorsque toutes ces valeurs ne sont pas rigoureusement identiques, les écarts tolérés sont tels que lorsqu'ils sont combinés, la différence de déport longitudinal induit sur le châssis entre le déport le plus faible parmi les quatre roues, et le déport le plus élevé, n'excède pas 5 cm, voire 2 ou 3 cm. Ce faible écart de déport peut en effet être absorbé par un glissement modéré des pneumatiques sur le sol au cours de l'abaissement, sans engendrer de contraintes nuisibles sur les trains roulants, même avec les quatre roues bloquées par le frein de parking.

La figure 20 schématise les différentes étapes d'un procédé d'abaissement du châssis 2 du véhicule, particulièrement adapté lorsque toutes les roues ne disposent pas de la même cinématique de mouvement lors de l'abaissement, contrairement au mode décrit en référence à

la figure 19. Néanmoins, le procédé est également applicable à ce mode, sans sortir du cadre de l'invention.

Le procédé débute par une étape E1 d'attente de réception d'un ordre d'abaissement du châssis. Cet ordre peut être déclenché par un opérateur, par exemple via un bouton dédié du tableau de bord, ou tout autre bouton relié à l'unité de contrôle 33 du véhicule.

Lorsqu'un tel ordre d'abaissement est reçu, l'étape E2 consiste à vérifier que les roues du train avant ne présentent pas un angle de braquage trop élevé, car dans le cas contraire, cela pourrait conduire à faire pivoter le véhicule au cours de l'abaissement du châssis. Ainsi, si l'angle de braquage est supérieur à une valeur sécuritaire, une étape E'2 est mise en oeuvre pour rétablir la direction jusqu'à l'obtention d'un angle de braquage convenable. Cette étape E'2 peut être réalisée de manière automatisée grâce à un système de direction motorisé, ou bien de manière manuelle par l'opérateur, en agissant directement sur le volant du véhicule.

Lorsque l'angle de braquage est inférieur à la valeur sécuritaire, l'étape E3 peut être mise en oeuvre, consistant en l'actionnement du frein de parking uniquement pour les roues R3, R4 du train roulant arrière. Une fois ce frein de parking activé sur le train roulant arrière et maintenu désactivé sur le train roulant avant, l'étape E4 réside dans le basculement de toutes les vannes de sécurité 72 de leur position fermée à leur position ouverte, de manière à placer les dispositifs sécuritaires 40 dans l'état inactif. L'étape E5 consiste ensuite à procéder à l'abaissement du châssis 2, par commande des actionneurs 32, toujours via l'unité 33 du véhicule. D'ailleurs, cette unité 33 peut être programmée pour mettre en oeuvre de manière successive l'ensemble des étapes de ce procédé, de manière automatique, c'est-à-dire sans intervention de l'opérateur. L'étape d'abaissement E5 est poursuivie jusqu'à ce que le châssis 2 repose sur le sol 4, dans sa position basse d'appui. Pour éviter une trop faible adhérence du véhicule sur le sol en position basse d'appui du châssis sur le sol, il peut être procédé à une étape E6 de mise en chargement sécuritaire des pneumatiques des roues. Cette étape facultative vise à ce que les pneumatiques ne soient pas totalement déchargés suite à l'appui du châssis sur le sol. Elle est par exemple mise en oeuvre en opérant une commande de levage du châssis 2 via les actionneurs 32, de manière à provoquer un faible déplacement relatif vertical entre ce châssis et l'axe de rotation de chaque roue. Ce déplacement vertical n'excède normalement pas plus de quelques millimètres, afin d'éviter une perte de contact entre le châssis 2 et le sol 4. Néanmoins, la mise en chargement des pneumatiques sur le sol renforce l'adhérence globale du véhicule en position basse d'appui de son châssis. Les risques de glissement du véhicule s'en trouvent réduits, ce qui demeure particulièrement avantageux lorsque le véhicule est abaissé sur un sol en pente.

Une fois l'abaissement réalisé, l'étape E7 peut être mise en oeuvre, consistant en l'actionnement du frein de parking pour les roues R1, R2 du train roulant avant, avec le frein de parking maintenu activé pour les roues du train arrière. Une fois ce frein de parking activé sur le train roulant avant, la dernière étape E8 réside dans l'activation des dispositifs 98 de blocage en rotation des bras 28 de suspension des roues, afin d'éviter les risques de mouvements parasites du châssis au cours des opérations de déchargement / chargement des marchandises.

L'ordre de certaines de ces étapes peut néanmoins être inversé. Par exemple, l'étape E7 d'actionnement du frein de parking pour les roues R1, R2 du train roulant avant, pourrait être réalisé après l'étape E8 d'activation des dispositifs 98 de blocage en rotation des bras 28 de suspension des roues, sans sortir du cadre de l'invention. Il en est de même pour les étapes E3 et E4, ou encore pour les étapes E2-E'2 et E3.

Bien entendu, diverses modifications peuvent être apportées par l'homme du métier à l'invention qui vient d'être décrite, uniquement à titre d'exemples non limitatifs, et dont la portée est délimitée par les revendications annexées. En particulier, les caractéristiques des différents modes et des différentes réalisations et alternatives peuvent être combinées, sans sortir du cadre de l'invention.

## Revendications

1. Véhicule (1) comprenant un châssis (2) à position verticale commandée, de manière à pouvoir être déplacé entre une position haute de roulage et une position basse d'appui de ce châssis sur le sol (4), le véhicule comprenant également une pluralité de roues (R1-R4), et, associés à chaque roue :
- un bras de suspension (28) portant la roue, le bras étant monté pivotant sur le châssis (2) ;
- un actionneur (32) de bras de suspension, agencé entre le bras de suspension (28) et le châssis (2), l'actionneur permettant de commander une position angulaire du bras relativement au châssis, afin de faire varier la position verticale de ce châssis ;
**caractérisé en ce qu'**il comprend:
- un dispositif sécuritaire (40) capable de limiter l'abaissement accidentel du châssis (2), le dispositif pouvant adopter d'une part un état actif dans lequel il permet de limiter la rotation du bras de suspension (28), selon un premier sens (S1) conduisant à l'abaissement du châssis, jusqu'à une position de sécurité de ce bras, et d'autre part un état inactif dans lequel il autorise la rotation de ce bras (28) dans le premier sens (S1), au-delà de la position de sécurité, le dispositif sécuritaire (40) comporte un vérin (46) dont un cylindre (48) est monté sur le châssis (2) et dont un piston (50) est monté sur le bras de suspension (28), ou inversement, le vérin définissant une première chambre (54) communiquant avec un premier (62) et un second passage de fluide (64) à travers le cylindre (48), espacés l'un de l'autre selon une direction de coulissement (66) du piston dans le cylindre de sorte que le second passage (64) se situe le plus proche d'un fond (58) de la première chambre défini par le cylindre, le second passage (64) communiquant avec une première conduite de fluide (68) équipée d'une vanne de sécurité (72) adoptant :
- une position ouverte à l'état inactif du dispositif sécuritaire (40), de manière à permettre l'évacuation du fluide de la première chambre (54) par le second passage (64), lors d'un déplacement du piston (50) en direction du fond (58) de la première chambre et provoqué par la rotation du bras de suspension (28) dans ledit premier sens (S1) ; et
- une position fermée à l'état actif du dispositif sécuritaire (40), de sorte que lors d'un déplacement du piston (50) en direction du fond (58) de la première chambre, provoqué par la rotation du bras de suspension (28) dans ledit premier sens (S1), le piston (50) se bloque dans une position de sécurité à distance du fond (58) de la première chambre, position dans laquelle le fluide est comprimé entre la tête de piston (52) et la vanne de sécurité (72).

2. Véhicule selon la revendication 1, **caractérisé en ce qu'**associé à chaque roue (R1-R4), le véhicule comporte un amortisseur (36) agencé entre le châssis (2) et le bras de suspension (28) de la roue.

3. Véhicule selon la revendication 2, **caractérisé en ce que** l'amortisseur (36) est formé par un élément distinct du dispositif sécuritaire (40).

4. Véhicule selon la revendication 2, **caractérisé en ce que** le dispositif sécuritaire (40) est intégré à l'amortisseur (36), ce dernier comportant un vérin formé par le vérin (46) du dispositif sécuritaire.

5. Véhicule selon l'une quelconque des revendications précédentes, **caractérisé en ce que** le vérin (46) définit une seconde chambre (56) séparée de la première chambre (54) par la tête de piston (52), la seconde chambre (56) communiquant avec un troisième passage de fluide (74) à travers le cylindre (48), et **en ce qu'**en aval de la vanne de sécurité (72) dans le sens d'écoulement allant du second passage (64) vers cette vanne de sécurité (72), la première conduite de fluide (68) communique d'une part avec une seconde conduite de fluide (70) raccordée au premier passage (62), et d'autre part avec un circuit fluidique (78).

6. Véhicule selon la revendication 5, **caractérisé en ce que** le circuit fluidique (78) communique avec le troisième passage de fluide (74) à travers le cylindre (48).

7. Véhicule selon la revendication 5, **caractérisé en ce que** le circuit fluidique (78) communique avec le troisième passage de fluide (74) du vérin (46) appartenant au dispositif sécuritaire (40) associé à la roue du véhicule située de manière opposée selon une direction transversale (T) du véhicule.

8. Véhicule selon l'une quelconque des revendications 5 à 7, **caractérisé en ce que** le circuit fluidique (78) comporte un premier clapet anti-retour (86a) associé à un orifice de passage de fluide en compression (88a), ainsi qu'un conduit (90b) de contournement de l'orifice de passage de fluide en compression (88a), le conduit de contournement (90b) étant équipé d'un second clapet anti-retour (86b) associé à un orifice de passage de fluide en détente (88b), le second clapet anti-retour (86b) autorisant un écoulement de fluide dans un sens opposé à celui du premier clapet anti-retour (86a), et l'orifice de passage de fluide en compression (88a) présentant une section de passage différente de celle de l'orifice de passage de fluide en détente (88b).

9. Véhicule selon l'une quelconque des revendications 5 à 8, **caractérisé en ce que** le circuit fluidique (78) comporte un réservoir de fluide (80) avec une réserve d'air (82).

10. Véhicule selon l'une quelconque des revendications précédentes, **caractérisé en ce que** l'actionneur de bras de suspension (32) est un coussin d'air d'axe longitudinal (92) confondu avec un axe du vérin (46) du dispositif sécuritaire (40), une extrémité longitudinale du coussin d'air (32) étant solidaire de l'un des deux éléments du vérin parmi le cylindre (48) et le piston (50), l'autre des deux éléments du vérin étant monté sur l'une des deux entités parmi le bras de suspension (28) et le châssis (2), et l'extrémité longitudinale opposée du coussin d'air (32) étant montée sur l'autre des deux entités parmi le bras de suspension (28) et le châssis (2).

11. Véhicule selon l'une quelconque des revendications précédentes, **caractérisé en ce que** le vérin (46) est un vérin hydraulique.

12. Véhicule selon l'une quelconque des revendications précédentes, **caractérisé en ce que** chaque roue (R1-R4) comporte une jante (22) et un pneumatique (24), ainsi qu'un renfort (96) agencé autour de la jante (22) et destiné à être contacté par une bande de roulement (20) du pneumatique en cas de perte de pression.

13. Véhicule selon l'une quelconque des revendications précédentes, **caractérisé en ce qu'**il comprend au moins l'une des caractéristiques suivantes :
- le véhicule comprend uniquement deux trains roulants, à savoir un train roulant avant (8) et un train roulant arrière (10) chacun équipé de préférence uniquement de deux roues en monte simple, chacune de ces roues (R1-R4) étant individuellement articulée sur le châssis par son bras de suspension (28) ;
- le véhicule présente, en configuration de roulage, une garde au sol (G1) inférieure à 500 mm ;
- en vue de dessous, le centre de gravité (12) du véhicule chargé est situé en arrière par rapport à un milieu d'empattement (14) entre un train roulant avant (8) et un train roulant arrière (10) ;
- le véhicule présente un espace de chargement de marchandises (6), et il forme de préférence un camion de livraison urbaine.

14. Véhicule selon l'une quelconque des revendications précédentes, **caractérisé en ce qu'**il comprend de plus, associé à chaque roue (R1-R4), un dispositif de blocage en rotation (98) de son bras de suspension (28), le dispositif de blocage étant configuré pour empêcher la rotation du bras suspension (28) par rapport au châssis (2) dans les deux sens de rotation, lorsque le châssis (2) se trouve en position basse d'appui sur le sol.

15. Véhicule selon la revendication 14 combinée à la revendication 5, **caractérisé en ce que** le dispositif de blocage en rotation du bras de suspension est une vanne d'arrêt (98) faisant partie intégrante du circuit fluidique (78) du dispositif sécuritaire (40), cette vanne interdisant, dans une position d'arrêt, le déplacement du piston (50) dans le cylindre (48), dans les deux sens de sa direction de coulissement (66).

16. Véhicule selon l'une quelconque des revendications précédentes, **caractérisé en ce que** pour chaque roue (R1-R4) du véhicule, dans la position haute de roulage du châssis (2) :
- son bras de suspension (28) présente un axe de rotation de bras (30) par rapport au châssis (2) ;
- la roue présente un axe de rotation de roue (26) par rapport au bras de suspension (28), les axes de rotation de bras et de rotation de roue (30, 26) étant parallèles ou sensiblement parallèles ;
- son bras de suspension (28) présente une longueur de bras (LB) définie entre les axes de rotation de bras et de rotation de roue (30, 26) ;
- l'axe de rotation de bras (30) présente une première distance verticale au sol (DV1) ;
- l'axe de rotation de roue (26) présente une seconde distance verticale au sol (DV2) ; et
- la roue comprend une bande de roulement (20) présentant un diamètre de roue (D),
et **en ce que** pour toutes les roues (R1-R4) :
- l'axe de rotation de bras (30) est décalé longitudinalement de l'axe de rotation de roue (26) selon un même sens ;
- la longueur de bras (LB) est la même ou sensiblement la même ;
- la première distance verticale au sol (DV1) est la même ou sensiblement la même ;
- la seconde distance verticale au sol (DV2) est la même ou sensiblement la même ; et
- le diamètre de roue (D) est le même ou sensiblement le même.

17. Procédé d'abaissement au sol d'un châssis (2) de véhicule selon l'une quelconque des revendications précédentes, **caractérisé en ce qu'**il comprend une étape de basculement de la vanne de sécurité (72) de chaque roue de sa position fermée à sa position ouverte, puis une étape de commande des actionneurs (32) pour entraîner l'abaissement du châssis (2) en direction du sol (4).

18. Procédé selon la revendication précédente, mis en oeuvre avec un véhicule comprenant uniquement deux trains roulants, à savoir un train roulant avant (8) et un train roulant arrière (10), chaque roue (R1-R4) des trains roulants (8, 10) étant associée à un frein de parking, **caractérisé en ce qu'**il comprend les étapes successives suivantes :
- lorsque le châssis (2) se trouve en position haute de roulage, actionnement du frein de parking uniquement pour toutes les roues (R3, R4) de l'un des deux trains roulants (10) ;
- abaissement du châssis (2) jusqu'à sa position basse d'appui sur le sol (4) ; et
- actionnement du frein de parking pour toutes les roues (R1, R2) de l'autre des deux trains roulants (8).

## Patentansprüche

1. Fahrzeug (1), umfassend ein Fahrgestell (2) mit gesteuerter vertikaler Position, so dass es zwischen einer hohen Fahrposition und einer niedrigen Abstützposition des Fahrgestells auf dem Boden (4) bewegt werden kann, wobei das Fahrzeug ebenfalls eine Vielzahl von Rädern (R1-R4) umfasst und jedem Rad Folgendes zugeordnet ist:
- ein Aufhängungsarm (28), der das Rad trägt, wobei der Arm schwenkbar am Fahrgestell (2) montiert ist;
- ein Aufhängungsarm-Stellglied (32), das zwischen dem Aufhängungsarm (28) und dem Fahrgestell (2) angeordnet ist, wobei das Stellglied es ermöglicht, eine Winkelposition des Arms im Verhältnis zum Fahrgestell zu steuern, um die vertikale Position des Fahrgestells zu variieren;
**dadurch gekennzeichnet, dass** es Folgendes umfasst:
- eine Sicherheitsvorrichtung (40), die das unbeabsichtigte Absenken des Fahrgestells (2) begrenzen kann, wobei die Vorrichtung einerseits einen aktiven Zustand, in dem sie es ermöglicht, die Drehung des Aufhängungsarms (28) in einer ersten Richtung (S1) zu begrenzen, die zum Absenken des Fahrgestells bis zu einer Sicherheitsposition des Arms führt, und andererseits einen inaktiven Zustand annehmen kann, in dem sie die Drehung des Arms (28) in der ersten Richtung (S1) über die Sicherheitsposition hinaus gestattet,
wobei die Sicherheitsvorrichtung (40) einen Stellantrieb (46) aufweist, von dem ein Zylinder (48) am Fahrgestell (2) montiert ist und ein Kolben (50) am Aufhängungsarm (28) montiert ist oder umgekehrt, wobei der Stellantrieb eine erste Kammer (54) definiert, die mit einem ersten (62) und einem zweiten Fluiddurchgang (64) durch den Zylinder (48) in Verbindung steht, die in einer Gleitrichtung (66) des Kolbens im Zylinder voneinander beabstandet ist, so dass sich der zweite Durchgang (64) am nächsten an einer Unterseite (58) der durch den Zylinder definierten ersten Kammer befindet, wobei der zweite Durchgang (64) mit einer ersten Fluidleitung (68) in Verbindung steht, die mit einem Sicherheitsventil (72) ausgestattet ist, das Folgendes einnimmt:
- eine offene Position im inaktiven Zustand der Sicherheitsvorrichtung (40), um das Abfließen des Fluids aus der ersten Kammer (54) durch den zweiten Durchgang (64) während einer Bewegung des Kolbens (50) in Richtung der Unterseite (58) der ersten Kammer zu ermöglichen, die durch die Drehung des Aufhängungsarms (28) in der ersten Richtung (S1) verursacht wird; und
- eine geschlossene Position im aktiven Zustand der Sicherheitsvorrichtung (40), so dass bei einer Bewegung des Kolbens (50) in Richtung der Unterseite (58) der ersten Kammer, die durch die Drehung des Aufhängungsarms (28) in der ersten Richtung (S1) verursacht wird, der Kolben (50) in einer Sicherheitsposition im Abstand von der Unterseite (58) der ersten Kammer blockiert, eine Position, in der das Fluid zwischen dem Kolbenkopf (52) und dem Sicherheitsventil (72) komprimiert wird.

2. Fahrzeug nach Anspruch 1, **dadurch gekennzeichnet, dass** das Fahrzeug jedem Rad (R1-R4) zugeordnet einen Stoßdämpfer (36) aufweist, der zwischen dem Fahrgestell (2) und dem Aufhängungsarm (28) des Rades angeordnet ist.

3. Fahrzeug nach Anspruch 2, **dadurch gekennzeichnet, dass** der Stoßdämpfer (36) durch ein von der Sicherheitsvorrichtung (40) verschiedenes Element gebildet wird.

4. Fahrzeug nach Anspruch 2, **dadurch gekennzeichnet, dass** die Sicherheitsvorrichtung (40) in den Stoßdämpfer (36) integriert ist, wobei letzterer einen durch den Stellantrieb (46) der Sicherheitsvorrichtung gebildeten Stellantrieb aufweist.

5. Fahrzeug nach einem der vorhergehenden Ansprüche, **dadurch gekennzeichnet, dass** der Stellantrieb (46) eine zweite Kammer (56) definiert, die von der ersten Kammer (54) durch den Kolbenkopf (52) getrennt ist, wobei die zweite Kammer (56) über den Zylinder (48) mit einem dritten Fluiddurchgang (74) in Verbindung steht, und dadurch, dass die erste Fluidleitung (68) stromabwärts des Sicherheitsventils (72) in Strömungsrichtung vom zweiten Durchgang (64) zu dem Sicherheitsventil (72) hin einerseits mit einer zweiten Fluidleitung (70), die mit dem ersten Durchgang (62) verbunden ist, und andererseits mit einem Fluidkreislauf (78) in Verbindung steht.

6. Fahrzeug nach Anspruch 5, **dadurch gekennzeichnet, dass** der Fluidkreislauf (78) über den Zylinder (48) mit dem dritten Fluiddurchgang (74) in Verbindung steht.

7. Fahrzeug nach Anspruch 5, **dadurch gekennzeichnet, dass** der Fluidkreislauf (78) mit dem dritten Fluiddurchgang (74) des Stellantriebs (46) in Verbindung steht, der zu der Sicherheitsvorrichtung (40) gehört, die dem Rad des Fahrzeugs zugeordnet ist, das sich in einer Querrichtung (T) des Fahrzeugs gegenüberliegend befindet.

8. Fahrzeug nach einem der Ansprüche 5 bis 7, **dadurch gekennzeichnet, dass** der Fluidkreislauf (78) eine erste Rückschlagklappe (86a), die einer Durchgangsöffnung für Fluid unter Druck (88a) zugeordnet ist, sowie eine Leitung (90b) zum Umgehen der Durchgangsöffnung für Fluid unter Druck (88a) umfasst, wobei die Umgehungsleitung (90b) mit einer zweiten Rückschlagklappe (86b) ausgestattet ist, die einer Durchgangsöffnung für Fluid in Ausdehnung (88b) zugeordnet ist, wobei die zweite Rückschlagklappe (86b) eine Fluidströmung in einer Richtung ermöglicht, die entgegengesetzt zu der der ersten Rückschlagklappe (86a) ist, und die Durchgangsöffnung für Fluid unter Druck (88a) einen Durchgangsabschnitt aufweist, der sich von dem der Durchgangsöffnung für Fluid in Ausdehnung (88b) unterscheidet.

9. Fahrzeug nach einem der Ansprüche 5 bis 8, **dadurch gekennzeichnet, dass** der Fluidkreislauf (78) ein Fluidreservoir (80) mit einem Luftvorrat (82) aufweist.

10. Fahrzeug nach einem der vorhergehenden Ansprüche, **dadurch gekennzeichnet, dass** das Aufhängungsarm-Stellglied (32) ein Luftkissen mit Längsachse (92) ist, welche mit einer Achse des Stellantriebs (46) der Sicherheitsvorrichtung (40) zusammenfällt, wobei ein Längsende des Luftkissens (32) fest mit einem der beiden Elemente des Stellantriebs aus Zylinder (48) und Kolben (50) verbunden ist, während das andere der beiden Elemente des Stellantriebs an einer der beiden Einheiten aus Aufhängungsarm (28) und Fahrgestell (2) montiert ist, und das gegenüberliegende Längsende des Luftkissens (32) an der anderen der beiden Einheiten aus Aufhängungsarm (28) und Fahrgestell (2) montiert ist.

11. Fahrzeug nach einem der vorhergehenden Ansprüche, **dadurch gekennzeichnet, dass** der Stellantrieb (46) ein Hydraulikzylinder ist.

12. Fahrzeug nach einem der vorhergehenden Ansprüche, **dadurch gekennzeichnet, dass** jedes Rad (R1-R4) eine Felge (22) und einen Reifen (24) sowie eine um die Felge (22) angeordnete Verstärkung (96) aufweist und dazu bestimmt ist, von einer Lauffläche (20) des Reifens bei Druckverlust berührt zu werden.

13. Fahrzeug nach einem der vorhergehenden Ansprüche, **dadurch gekennzeichnet, dass** es mindestens eines der folgenden Merkmale umfasst:
- das Fahrzeug umfasst nur zwei Radaufhängungen, nämlich eine vordere Radaufhängung (8) und eine hintere Radaufhängung (10), von denen jede vorzugsweise nur mit zwei Rädern in Einfachbereifung ausgestattet ist, wobei jedes dieser Räder (R1-R4) einzeln über seinen Aufhängungsarm (28) am Fahrgestell angelenkt ist;
- das Fahrzeug weist in Transportkonfiguration eine Bodenfreiheit (G1) von weniger als 500 mm;
- der Schwerpunkt (12) des beladenen Fahrzeugs befindet sich, von unten gesehen, bezogen auf eine Mitte des Radstands (14) hinten zwischen einer vorderen Radaufhängung (8) und einer hinteren Radaufhängung (10);
- das Fahrzeug weist einen Güterladeraum (6) auf und bildet vorzugsweise einen städtischen Lieferwagen.

14. Fahrzeug nach einem der vorhergehenden Ansprüche, **dadurch gekennzeichnet, dass** es außerdem jedem Rad (R1-R4) zugeordnet eine Drehblockierungsvorrichtung (98) für seinen Aufhängungsarm (28) aufweist, wobei die Blockierungsvorrichtung dazu konfiguriert ist, die Drehung des Aufhängungsarms (28) im Verhältnis zum Fahrgestell (2) in beide Drehrichtungen zu verhindern, wenn das Fahrgestell (2) sich in einer niedrigen Abstützposition auf dem Boden befindet.

15. Fahrzeug nach Anspruch 14 in Kombination mit Anspruch 5, **dadurch gekennzeichnet, dass** die Drehblockierungsvorrichtung für den Aufhängungsarm ein Absperrventil (98) ist, das einen integralen Bestandteil des Fluidkreislaufs (78) der Sicherheitsvorrichtung (40) darstellt, wobei das Ventil in der Absperrposition die Bewegung des Kolbens (50) im Zylinder (48) in beide Richtungen seiner Gleitrichtung (66) unterbindet.

16. Fahrzeug nach einem der vorhergehenden Ansprüche, **dadurch gekennzeichnet, dass** für jedes Rad (R1-R4) des Fahrzeugs in der hohen Fahrposition des Fahrgestells (2):
- sein Aufhängungsarm (28) eine Armdrehachse (30) im Verhältnis zum Fahrgestell (2) aufweist;
- das Rad eine Raddrehachse (26) in Bezug auf den Aufhängungsarm (28) aufweist, wobei die Armdrehachse und die Raddrehachse (30, 26) parallel oder im Wesentlichen parallel sind;
- sein Aufhängungsarm (28) eine Armlänge (LB) aufweist, die zwischen der Armdrehachse und der Raddrehachse (30, 26) definiert ist;
- die Armdrehachse (30) einen ersten vertikalen Abstand zum Boden (DV1) aufweist;
- die Raddrehachse (26) einen zweiten vertikalen Abstand zum Boden (DV2) aufweist; und
- das Rad eine Lauffläche (20) mit einem Raddurchmesser (D) umfasst,
und dadurch, dass für alle Räder (R1-R4):
- die Armdrehachse (30) in Längsrichtung von der Raddrehachse (26) in derselben Richtung versetzt ist;
- die Armlänge (LB) gleich oder im Wesentlichen gleich ist;
- der erste vertikale Abstand zum Boden (DV1) gleich oder im Wesentlichen gleich ist;
- der zweite vertikale Abstand zum Boden (DV2) gleich oder im Wesentlichen gleich ist; und
- der Raddurchmesser (D) gleich oder im Wesentlichen gleich ist.

17. Verfahren zum Absenken eines Fahrgestells (2) des Fahrzeugs auf den Boden nach einem der vorhergehenden Ansprüche, **dadurch gekennzeichnet, dass** es einen Schritt des Kippens des Sicherheitsventils (72) jedes Rads von seiner geschlossenen Position in seine offene Position und anschließend einen Schritt des Steuerns der Stellglieder (32) umfasst, um das Absenken des Fahrgestells (2) in Richtung des Bodens (4) anzutreiben.

18. Verfahren nach dem vorhergehenden Anspruch, das mit einem Fahrzeug durchgeführt wird, das nur zwei Radaufhängungen umfasst, nämlich eine vordere Radaufhängung (8) und eine hintere Radaufhängung (10), wobei jedes Rad (R1-R4) der Radaufhängungen (8, 10) einer Feststellbremse zugeordnet ist, **dadurch gekennzeichnet, dass** es die folgenden aufeinanderfolgenden Schritte umfasst:
- wenn sich das Fahrgestell (2) in der hohen Fahrposition befindet, Aktivieren der Feststellbremse nur für alle Räder (R3, R4) einer der beiden Radaufhängungen (10);
- Absenken des Fahrgestells (2) bis in seine niedrige Abstützposition auf dem Boden (4); und
- Betätigen der Feststellbremse für alle Räder (R1, R2) der anderen der beiden Radaufhängungen (8).

## Claims

1. Vehicle (1) comprising a controlled vertical position chassis (2) in order to be moved between a high running position and a low position in which the chassis is supported on the ground (4), the vehicle also including a plurality of wheels (R1-R4), and, associated with each wheel:
- a wheel-bearing suspension arm (28), the arm being pivotably mounted on the chassis (2);
- a suspension arm actuator (32), arranged between the suspension arm (28) and the chassis (2), the actuator (32) making it possible to control an angular position of the arm relative to the chassis, in order to vary the vertical position of the chassis,
**characterised in that** it comprises:
- a safety device (40) capable of limiting the accidental lowering of the chassis (2), the device being capable of adopting, on the one hand, an active state in which it makes it possible to limit the rotation of the suspension arm (28), in a first direction (S1) leading to the lowering of the chassis, to a safety position of this arm, and, on the other hand, an inactive state in which it allows the rotation of this arm (28) in the first direction (S1), beyond the safety position,
the safety device (40) comprises a jack (46) having a cylinder (48) mounted on the chassis (2) and a piston (50) mounted on the suspension arm (28), or vice versa, the jack defining a first chamber (54) communicating with a first (62) and a second fluid passage (64) through the cylinder (48), spaced apart from one another in a direction of sliding (66) of the piston in the cylinder so that the second passage (64) is located as close as possible to a bottom (58) of the first chamber defined by the cylinder, the second passage (64) communicating with a first fluid duct (68) provided with a safety valve (72) adopting:
- an open position in the inactive state of the safety device (40), so as to allow the fluid to be discharged from the first chamber (54) through the second passage (64), when the piston (50) moves toward the bottom (58) of the first chamber due to the rotation of the suspension arm (28) in said first direction (S1); and
- a closed position in the active state of the safety device (40), so that when the piston (50) moves toward the bottom (58) of the first chamber, due to the rotation of the suspension arm (28) dans in said first direction (S1), the piston (50) is locked in a safety position at a distance from the bottom (58) of the first chamber, in which position the fluid is compressed between the piston head (52) and the safety valve (72).

2. Vehicle according to claim 1, **characterized in that**, associated with each wheel (R1-R4), the vehicle has a damper (36) arranged between the chassis (2) and the wheel suspension arm (28).

3. Vehicle according to claim 2, **characterized in that** the damper (36) is formed by an element distinct from the safety device (40).

4. Vehicle according to claim 2, **characterized in that** the safety device (40) is integrated in the damper (36), the latter comprising a jack formed by the jack (46) of the safety device.

5. Vehicle according to any one of the previous claims, **characterized in that** the jack (46) defines a second chamber (56) separated from the first chamber (54) by the piston head( 52), the second chamber (56) communicating with a third fluid passage (74) through the cylinder (48), and **in that**, downstream of the safety valve (72) in the direction of flow going from the second passage (64) to the safety valve (72), the first fluid duct (68) communicates, on the one hand, with a second fluid duct (70) connected to the first passage (62), and, on the other hand, with a fluid circuit (78).

6. Vehicle according to claim 5, **characterized in that** the fluid circuit (78) communicates with the third fluid passage (74) through the cylinder (48).

7. Vehicle according to claim 5, **characterized in that** the fluid circuit (78) communicates with the third fluid passage (74) of the jack (46) belonging to the safety device (40) associated with the wheel of the vehicle located opposite in a transverse direction (T) of the vehicle.

8. Vehicle according to any one of claims 5 to 7, **characterized in that** the fluid circuit (78) has a first non-return valve (86a) associated with a compression fluid through-opening (88a), as well as a duct (90b) for bypassing the compression fluid through-opening (88a), the bypass duct (90b) being equipped with a second non-return valve (86b) associated with an expansion fluid through-opening (88b), the second non-return valve (86b) allowing a flow of fluid in the direction opposite that of the first non-return valve (86a), and the compression fluid through-opening (88a) having a different flow cross-section from that of the expansion fluid through-opening (88b).

9. Vehicle according to any one of claims 5 to 8, **characterized in that** the fluid circuit (78) includes a fluid tank (80) with an air reserve (82).

10. Vehicle according to any one of the previous claims, **characterized in that** the suspension arm actuator (32) is an air bag having a longitudinal axis (92) merging with an axis of the jack (46) of the safety device (40), a longitudinal end of the air bag (32) being secured to one of the two elements of the jack among the cylinder (48) and the piston (50), the other of the two elements of the jack being mounted on one of the two entities among the suspension arm (28) and the chassis( 2), and the opposite longitudinal end of the air bag (32) being mounted on the other of the two entities among the suspension arm (28) and the chassis (2).

11. Vehicle according to any one of the previous claims, **characterized in that** the jack (46) is a hydraulic jack.

12. Vehicle according to any one of the previous claims, **characterized in that** each wheel (R1-R4) has a rim (22) and a tire (24), as well as a reinforcement (96) arranged around the rim (22) and intended come into contact with a tread (20) of the tire in the event of a pressure loss.

13. Vehicle according to any one of the previous claims, **characterized in that** it includes at least one of the following features:
- the vehicle includes only two running gears, namely a front running gear (8) and a rear running gear (10) each preferably equipped with only two single-wheel assemblies, each of these wheels (R1-R4) being individually articulated on the chassis by its suspension arm (28);
- the vehicle has, in the running configuration, a ground clearance (G1) of less than 500 mm;
- when viewed from below, the centre of gravity (12) of the loaded vehicle is located behind a wheelbase midpoint (14) between a front running gear (8) and a rear running gear (10);
- the vehicle has a cargo loading space (6), and is preferably an urban delivery truck.

14. Vehicle according to any one of the previous claims, **characterized in that** it also includes, associated with each wheel (R1-R4), a device for preventing rotation (98) of its suspension arm (28), the device for preventing rotation being configured to prevent the rotation of the suspension arm (28) with respect to the chassis (2) in both directions of rotation, when the chassis (2) is in the low position supported on the ground.

15. Vehicle according to claim 14 combined with claim 5, **characterized in that** the device for preventing rotation of the suspension arm is a blocking valve (98) forming an integral part of the fluid circuit (78) of the safety device (40), this valve preventing, in a blocking position, the movement of the piston (50) in the cylinder (48), in both of the sliding directions (66) thereof.

16. Vehicle according to any one of the previous claims, **characterized in that**, for each wheel (R1-R4) of the vehicle, in the high running position of the chassis (2):
- its suspension arm (28) has an arm rotation axis (30) with respect to the chassis (2);
- the wheel has a wheel rotation axis (26) with respect to the suspension arm (28), the two arm rotation and wheel rotation axes (30, 26) being parallel or substantially parallel;
- its suspension arm (28) has an arm length (LB) defined between the arm rotation and wheel rotation axes (30, 26);
- the arm rotation axis (30) has a first vertical distance to the ground (DV1);
- the wheel rotation axis (26) has a second vertical distance to the ground (DV2); and
- the wheel includes a tread (20) having a wheel diameter (D),
and **in that**, for all of the wheels (R1-R4):
- the arm rotation axis (30) is longitudinally offset from the wheel rotation axis (26) in the same direction;
- the arm length (LB) is the same or substantially the same;
- the first vertical distance to the ground (DV1) is the same or substantially the same;
- the second vertical distance to the ground (DV2) is the same or substantially the same; and
- the wheel diameter (D) is the same or substantially the same.

17. Method for lowering, to the ground, chassis (2) of a vehicle according to any one of the previous claims, **characterized in that** it comprises a step of switching the safety valve (72) of each wheel from its closed position to its open position, then a step of controlling the actuators (32) in order to lower the chassis (2) toward the ground (4).

18. Method according to the previous claim, implemented with a vehicle including only two running gears, namely a front running gear (8) and a rear running gear (10), each wheel (R1-R4) of the running gears (8, 10) being associated with a parking brake, **characterized in that** it comprises the following series of steps:
- when the chassis (2) is in the high running position, actuation of the parking brake only for all of the wheels (R3, R4) of one of the two running gears (10);
- lowering of the chassis (2) to its low position supported on the ground (4); and
- actuation of the parking brake for all of the wheels (R1, R2) of the other of the two running gears (8).
